(19) Europäisches Patentamt / European Patent Office / Office européen des brevets

(11) **EP 2 381 510 A1**

(12) **EUROPEAN PATENT APPLICATION**
published in accordance with Art. 153(4) EPC

(43) Date of publication:
26.10.2011 Bulletin 2011/43

(51) Int Cl.:
H01M 2/16 (2006.01)    H01M 10/052 (2010.01)
H01M 10/0566 (2010.01)    H01M 10/058 (2010.01)

(21) Application number: 09834949.1

(22) Date of filing: 24.12.2009

(86) International application number:
PCT/JP2009/071447

(87) International publication number:
WO 2010/074151 (01.07.2010 Gazette 2010/26)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 24.12.2008 JP 2008328090
24.12.2008 JP 2008328153
24.12.2008 JP 2008328181
24.12.2008 JP 2008328215
04.06.2009 JP 2009135146

(72) Inventors:
• USAMI Yasushi
Nagahama-shi
Shiga 526-8660 (JP)
• YAMADA Takeyoshi
Nagahama-shi
Shiga 526-8660 (JP)
• YASUKAWA Eiki
Ibaraki 300-0332 (JP)
• NAKAJIMA Takayuki
Tokyo 108-0014 (JP)

(71) Applicants:
• Mitsubishi Plastics, Inc.
Tokyo 103-0021 (JP)
• Mitsubishi Chemical Corporation
Tokyo 108-0014 (JP)

(74) Representative: Hayes, Adrian Chetwynd et al
Boult Wade Tennant
Verulam Gardens
70 Gray's Inn Road
London WC1X 8BT (GB)

(54) **SEPARATOR FOR BATTERY, AND NON-AQUEOUS LITHIUM BATTERY**

(57) Disclosed is a separator for a battery, which comprises a porous film mainly composed of a polyolefin film, has heat resistance, and can improve battery properties. Specifically disclosed is a separator for a battery, which is **characterized by** having a layer mainly composed of a polyolefin resin, wherein at least one surface of the separator has an arithmetic average roughness (Ra) of 0.3μm or more.

Fig. 1A

# Fig. 1B

**Description**

TECHNICAL FIELD

The present invention relates to a separator for a battery and a non-aqueous lithium secondary battery having the separator for the battery. More particularly the present invention is intended to improve the surface property of the separator for the battery to enhance the output power property of the non-aqueous lithium secondary battery in which the separator for the battery is mounted.

BACKGROUND ART

A secondary battery is widely used as the power source of OA, FA, household appliances, and portable electronic devices such as home electric appliances, communication instruments, and the like. A lithium-ion secondary battery has a favorable volumetric efficiency when it is mounted on apparatuses and allows the apparatuses to be compact and lightweight. Therefore there is an increase in the use of portable devices in which a non-aqueous lithium-ion secondary battery is mounted.

Owing to research and development of a large secondary battery which has been made in the field of load leveling, UPS, an electric vehicle, and in many fields relating to environmental problems, the large secondary battery is allowed to have a large capacity, a high output power, a high voltage, and an excellent long-term storage stability. Therefore the non-aqueous lithium-ion secondary battery which is a kind of the rechargeable battery has widely spread in its usage.

The non-aqueous lithium-ion secondary battery is so designed that the upper limit of the working voltage thereof is usually 4.1V to 4.2V. Because electrolysis occurs in an aqueous solution at such a high voltage, the aqueous solution cannot be used as an electrolyte. Therefore as an electrolyte capable of withstanding a high voltage, a so-called non-aqueous electrolyte in which an organic solvent is used is adopted.

As a solvent for the non-aqueous electrolyte, an organic solvent having a high permittivity which allows a large number of lithium ions to be present is widely used. Organic carbonate ester such as polypropylene carbonate or ethylene carbonate is mainly used as the organic solvent having a high permittivity. As a supporting electrolyte serving as the ion source of the lithium ion in the solvent, an electrolyte having a high reactivity such as lithium phosphate hexafluoride is used in the solvent by melting it therein.

A separator for the non-aqueous lithium secondary battery is interposed between its positive electrode and negative electrode which directly contacts the positive electrode. Thus the separator is demanded to have insulating performance to prevent an internal short circuit from occurring. In addition the separator is required to have a porous structure so that it has air permeability to allow the migration of the lithium ion and a function of diffusing and holding the electrolyte. Therefore it is inevitable to use a porous film as the separator.

Recently the improvement of the battery performance is demanded owing to an increase in the amount of electricity consumption of mobile products such as a mobile phone, a PDA, and the like and that of electric tools. From the standpoint of environmental problems, the application of batteries to a hybrid electric vehicle, a plug-in hybrid car, and an electric vehicle is investigated. Thus higher improvement of the battery performance is demanded. In compliance with such demands, the improvement of the properties of a positive electrode, a negative electrode, an electrolyte, and a separator is being made. For example, the porous films made of polyethylene and secondary batteries to which the porous film is applied are known, as disclosed in Japanese Patent Application Laid-Open No. 11-060791 (patent document 1) and Patent No. 4049416 (patent document 2).

PRIOR ART DOCUMENT

PATENT DOCUMENT

Patent document 1: Japanese Patent Application Laid-Open No. 11-060791
Patent document 2: Patent No. 4049416

SUMMARY OF THE INVENTION

PROBLEM TO BE SOLVED BY THE INVENTION

But with the development of batteries having a high output power, the secondary batteries disclosed in the patent documents 1 and 2 are insufficient in terms of the output power property thereof.

The present invention has been made to solve the above-described problem. Therefore it is an object of the present invention to provide a separator for a battery improved to enhance its output power property and a non-aqueous lithium secondary battery in which the separator for the battery is used.

MEANS FOR SOLVING THE PROBLEM

To solve the above-described problem, the present invention provides a separator for a battery having a porous layer containing a polypropylene resin as a main component thereof, wherein an arithmetic average roughness Ra of at least one surface is set to not less than 0.3pm.

The present inventors have made energetic investigations and found that the arithmetic average roughness Ra of the separator for the battery at the negative electrode side thereof is set to favorably not less than 0.30pm, more favorably not less than 0.35pm, and most favorably not less than 0.50pm.

More specifically, as a result of the production of batteries by using the separators of the present invention for the battery, it has been found that there occurs a difference in the cycling characteristics of the batteries in dependence on the arithmetic average roughnesses Ra of the separators for the battery and that to set the arithmetic average roughness Ra to not less than 0.30pm is preferable. Although the details are still unclear, it is considered that when the arithmetic average roughness Ra is not less than 0.30pm, there is an increase in the number of electrolyte-stored portions on the surface of the separator and thereby the electrolyte-holding property of the separator is improved, which greatly contributes to the improvement of the cycle property of the battery.

Although the upper limit of the arithmetic average roughness Ra is not limited to a specific value, it is preferable to set the upper limit thereof to not more than $10\mu m$. By setting the arithmetic average roughness Ra to not more than $10\mu m$, it is possible to hold the electrolyte-holding property sufficiently and especially preferable in using the separator for the battery in which thickness accuracy, namely, a thin separator is required.

It is favorable that in the separator of the present invention for the battery, the mean peak spacing (Sm) of a roughness of at least one surface thereof is set to not less than $1.3\mu m$.

It is more favorable that the mean peak spacing (Sm) of the roughness of at least one surface of the separator is set to not less than $1.5\mu m$. The mean peak spacing (Sm) is an index indicating the interval of a concavity of the surface roughness and a convexity thereof. When the interval between the concavity and the convexity is large, there is an increase in the number of electrolyte-stored portions and thereby the property of maintaining the electrolyte between the electrode and separator is not nonuniform, which greatly contributes to the improvement of the cycle property of the battery. Although the upper limit of the mean peak spacing (Sm) is not limited to a specific value, the upper limit thereof is set to favorably not more than 50pm.

It is preferable that in the separator of the present invention for the battery, a 10-point average roughness Rz of a roughness degree of at least one surface thereof is set to not less than $5\mu m$.

As described above, when the 10-point average roughness Rz of the roughness degree of the surface of the separator is set to not less than $5\mu m$, the electrolyte-holding property is sufficiently improved. Thereby it is possible to improve the properties of the battery. The 10-point average roughness Rz is set to favorably 6 to $10\mu m$ and more favorably 6 to 8pm.

It is favorable that in the separator of the present invention for the battery, the ratio of an arithmetic average roughness RaP of at least one surface thereof in a longitudinal direction thereof to an arithmetic average roughness $Ra_v$ of the one surface in a width direction thereof is set to favorably 0.80 to 1.20 and more favorably 0.85 to 1.15.

When the ratio of $Rap/Ra_v$ is in the range of 0.80 to 1.20, the electrolyte-stored portions are isotropic. That is, the electrolyte-holding property is not nonuniform, which contributes to the improvement of the cycling characteristics of the battery.

In the separator of the present invention for the battery, any one of the arithmetic average roughness Ra, maximum height Ry of the roughness, and 10-point average roughness Rz of one surface thereof may be different from those of the other surface thereof.

It is preferable that in the separator of the present invention for the battery, a porous layer of the surface having the arithmetic average roughness Ra of not less than 0.3pm has a thickness of 5 to 50pm and a puncture strength of not less than 1.5N. It is preferable that the Gurley value is set to 10 to 1000 seconds/100ml and that the puncture strength is set to not less than 1.5N.

As described above, the thickness of the separator for the battery is set to 5 to 50pm which is comparatively thin, whereas the surface roughness of the separator is set to not less than 0.3pm which is comparatively thick to enhance the electrolyte-holding property without increasing the space occupied by the separator inside the battery. Thereby the cycle property is improved.

As described above, the thickness of the separator for the battery is set thin, whereas the puncture strength is set to not less than 1.5N to enhance the mechanical strength of the separator to prevent the separator from being cracked or damaged when the battery is produced and thereby prevent short circuit from occurring.

It is preferable that in the separator of the present invention for the battery, the Gurley value is set to 10 to 1000 seconds/100ml and that a bubble point pore diameter dBP is set to 0.001 to 0.1$\mu$m.

As described above, by setting the Gurley value to a comparatively small value to allow the intercommunicability of the separator in its thickness direction to be favorable and the migration of ions to be easy so that its electric resistance is low. Thereby the battery is allowed to have enhanced properties. Further the bubble point pore diameter dBP is set small in the range in which the migration of ions is not intercepted. That is, the occurrence of clogging is decreased by setting the bubble point pore diameter dBP to not less than 0.001$\mu$m, and pores are uniformly formed by setting the bubble point pore diameter dBP to not more than 0.1$\mu$m.

It is preferable that in the separator of the present invention for the battery, the porous layer of the surface thereof having the arithmetic average roughness Ra of not less than 0.3pm is a layer containing a heat-resistant polypropylene resin as a main component thereof.

It is preferable that the separator of the present invention for the battery has $\beta$ activity.

More specifically, it is possible to roughen the surface, as described above by adding a $\beta$ crystal nucleating agent to the polypropylene resin so that the polypropylene resin has $\beta$ activity.

It is preferable that the separator of the present invention for the battery is biaxially stretched.

That is, to impart the surface roughness to the surface of the separator, stretching conditions are the point. By selecting the stretching conditions, it is possible to set the arithmetic average roughness Ra, the mean peak spacing (Sm), and $Ra_p/Ra_v$ to the predetermined range.

The separator of the present invention for the battery may comprise a laminate composed of a porous layer containing a polypropylene resin as a main component thereof and a laminate composed of a porous layer containing a high-density polyethylene resin as a main component thereof or comprise a single layer composed of a porous layer containing a polypropylene resin as a main component thereof and a filler added to the polypropylene resin.

The present invention provides a non-aqueous lithium secondary battery using the separator for the battery, comprising a negative electrode and a positive electrode, opposed thereto via the separator for the battery, both of which are capable of storing and discharging lithium; and a non-aqueous electrolyte containing a non-aqueous solvent and a lithium salt.

It is preferable that a surface of the separator opposed to a negative electrode side of the battery and a surface thereof opposed to a positive electrode side of the battery are different from each other in any one of the arithmetic average roughness Ra, maximum height Ry, and 10-point average roughness Rz of the separator. As described above, in the case where the negative electrode side of the separator and the positive electrode side thereof are different from each other in any one of the arithmetic average roughness Ra thereof, the maximum height Ry thereof, and the 10-point average roughness Rz, it is possible to obtain a battery excellent in its capacity maintenance rate, output power property, and low-temperature output power.

It is preferable that in the separator for the battery to be incorporated in the non-aqueous lithium secondary battery of the present invention, the value of any one of the arithmetic average roughness Ra, the maximum height Ry, and the 10-point average roughness Rz at the negative electrode side of the separator is larger than the value of the arithmetic average roughness Ra, the maximum height Ry, and the 10-point average roughness Rz at the positive electrode side thereof.

It is preferable that in the separator for the battery to be incorporated in the non-aqueous lithium secondary battery of the present invention, the difference $\Delta$Ra between the arithmetic average roughness $Ra_1$ at the negative electrode side thereof and the arithmetic average roughness $Ra_2$ at the positive electrode side thereof is set to favorably not less than 0.15pm.

It is preferable that in the separator for the battery to be incorporated in the non-aqueous lithium secondary battery of the present invention, the difference $\Delta$Ry between the maximum height $Ry_1$ at the negative electrode side thereof and the maximum height $Ry_2$ at the positive electrode side thereof is set to favorably not less than 1.8$\mu$m.

It is preferable that in the separator for the battery to be incorporated in the non-aqueous lithium secondary battery of the present invention, the difference $\Delta$Rz between the 10-point average roughness $Rz_1$ at the negative electrode side thereof and the 10-point average roughness $Rz_2$ at the positive electrode side thereof is set to favorably not less than 3.0$\mu$m.

EFFECT OF THE INVENTION

Because the separator of the present invention for the battery is excellent in the performance of holding the electrolyte, the separator improves the cycle properties of the battery and allows the battery to have excellent heat resistance, air permeability, and mechanical strength.

The non-aqueous lithium secondary battery having the separator of the present invention for the battery has improved properties such as a volume maintenance rate, an output power property, and especially a low-temperature output power.

BRIEF DESCRIPTION OF THE DRWINGS

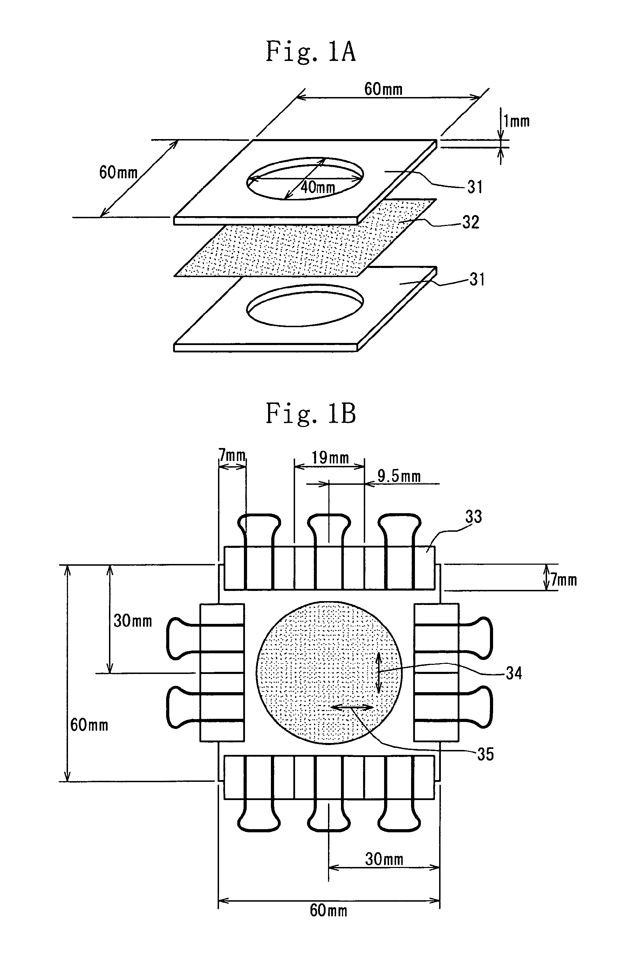

Figs. 1(A) and 1(B) are an explanatory view for explaining a method of fixing a separator for the battery in an X-ray diffraction measurement.

BEST MODE FOR CARRYING OUT THE INVENTION

The embodiment of the separator of the present invention for a battery is described in detail below. In the present invention, unless specifically described, the expression of "main component" in the embodiment includes a case in which a resin composition contains components other than the main component in a range where the function of the main component is not inhibited. Although the content ratio of the main component is not specified, the expression of "main component" also includes a case in which the main component is contained in the resin composition at not less than 50 mass %, favorably not less than 70 mass %, and especially favorably not less than 90 mass % (including 100%).

Unless otherwise described, the description of "X to Y" (X, Y are any numbers) is intended to mean "not less than X nor more than Y" and also includes the intention of "it is preferable that Z (subject) is larger than X and smaller than Y".

It is important that the separator of the present invention for the battery has a porous layer (layer A) containing a polyolefin resin as its main component. As the polyolefin resin, polyethylene resin, polypropylene resin, 1-polymethylpentene, and polyphenylene sulfide are listed.

As examples of the polyethylene resin, low-density polyethylene, linear low-density polyethylene, linear ultra-low-density polyethylene, intermediate-density polyethylene, high-density polyethylene, and copolymers containing ethylene as the main component thereof are listed. That is, copolymers and multi-component copolymers consisting of ethylene and one or two kinds of co-monomers selected from among α-olefins, whose carbon number is 3 to 10, such as propylene, butene-1, pentene-1, hexane-1, heptene-1, and octane-1; vinyl ester such as vinyl acetate, vinyl propionate; unsaturated carboxylic acid ester such as methyl acrylate, ethyl acrylate, methyl methacrylate, and ethyl methacrylate; and unsaturated compounds such as conjugated diene, unconjugated diene. In addition it is possible to exemplify mixed compositions of the copolymers or the multi-component copolymers. The content of the ethylene unit of the ethylene polymers exceeds 50 mass%.

Of these polyethylene resins, one or more kinds of the polyethylene resin selected from among the low-density polyethylene, the linear low-density polyethylene, and the high-density polyethylene are favorable. The high-density polyethylene is most favorable.

A polymerization catalyst for the polyethylene resin is not limited to a specific one, but any of a Ziegler-Natta type catalyst, a Philips type catalyst, a Kaminsky catalyst can be used. As a method of polymerizing the polyethylene resin, a single-stage polymerization, a two-stage polymerization, and a multi-stage polymerization are available. Any of these polymerization methods can be used for the polyethylene resin.

Although the melt flow rate (MFR) of the polyethylene is not specifically limited, the melt flow rate thereof is set to favorably 0.03 to 15g/10 minutes and more favorably 0.3 to 10g/10 minutes. When the MFR is in the above-described range, the back pressure of an extruder does not become very high in a molding operation and thus a high productivity can be obtained. In the present invention, the MFR is measured in accordance with JIS K7210 in the condition where temperature is 190˚C and a load is 2.16kg.

The method of producing the polyethylene resin is not limited to a specific one, but it is possible to exemplify known polymerization method using a known olefin polymerization catalyst, for example, a multi-site catalyst represented by a Ziegler-Natta type catalyst and a single-site catalyst represented by a Metallocene catalyst.

Examples of the polypropylene resin are described below. As the polypropylene resin to be used in the present invention, random copolymers or block copolymers consisting of homo-polypropylene (propylene homopolymer) or propylene and α-olefin such as ethylene, 1-butene, 1-pentene, 1-hexene, 1-heptene, 1-octene, 1-nonen or 1-decene are listed. Of the above-described polypropylene resins, the homo-polypropylene is used more favorably from the standpoint of the mechanical strength when it is used as the separator for the battery.

It is favorable to use the polypropylene resin having an isotactic structure pentad fraction showing tacticity at 80 to 99%. It is more favorable to use the polypropylene resin having the isotactic structure pentad fraction at 83 to 98% and most favorable to use the polypropylene resin having the isotactic structure pentad fraction at 85 to 97%. When the isotactic structure pentad fraction is too low, there is a fear that the mechanical strength of the film becomes low. On the other hand, the upper limit of the isotactic structure pentad fraction is specified by the upper limit industrially currently obtained. But when a resin having a higher regularity is developed in the future, there is a possibility that the upper limit of the isotactic structure pentad fraction is altered. The isotactic structure pentad fraction means a three-dimensional structure in which all of five methyl groups which are side chains branched from a main chain consisting of a carbon-carbon bond composed of arbitrary continuous five propylene units are positioned in the same direction or a ratio thereof. The attribution of a signal in a methyl group region complies with A. Zambelli et al (Marcomolecules 8,687, (1975)).

It is favorable that Mw/Mn which is a parameter showing the molecular-weight distribution of the polypropylene resin is 1.5 to 10.0. It is more favorable to use the polypropylene resin having the Mw/Mn of 2.0 to 8.0 and most favorable to use the polypropylene resin having the Mw/Mn of 2.0 to 6.0. The smaller is the Mw/Mn, the narrower is the molecular-weight distribution. When the Mw/Mn is less than 1.5, there occurs a problem that extrusion moldability is low, and in addition it is often difficult to industrially produce the polypropylene resin. On the other hand, when the Mw/Mn exceeds 10.0, the amount of a low molecular-weight component becomes large. Thereby the mechanical strength of the laminated porous film is liable to deteriorate. The Mw/Mn is obtained by a GPC (gel permeation chromatography) method.

Although the melt flow rate (MFR) of the polypropylene resin is not limited to a specific one, the melt flow rate (MFR) thereof is favorably 0.1 to 15g/10 minutes and more favorably 0.5 to 10g/10 minutes. When the MFR is less than 0.1g/10 minutes, the melt viscosity of the resin is high at a molding time and thus the productivity of the film deteriorates. On the other hand, when the MFR is more than 15g/10 minutes, the separator for the battery has a low strength. Thus a problem is liable to occur in practical use. The MFR is measured in accordance with JIS K7210 in conditions where temperature is 230˚C and a load is 2.16kg.

As the polypropylene resin, it is possible to use the following products commercially available: "Novatec PP" and "WINTEC" (produced by Japan Polypropylene Corporation), "Persify", "Notio", and "TAFMER XR" (produced by Mitsui Chemicals, Inc.), "Zerasu" and "Thermorun" (produced by Mitsubishi Chemical Corporation), "Sumitomo NOBLEN" and "Toughseren" produced by Sumitomo Chemical Co., Ltd., "Prime TPO" (produced by Prime Polymer Corporation), "AdfleX", "Adsyl", and "HMS-PP (PF814)" produced by SunAllomer Ltd., and "Inspire" produced by Dow Chemical Company.

In the separator of the present invention for the battery, it is particularly important that the arithmetic average roughness Ra of the surface of the porous layer (layer A) consisting of the polypropylene resin is not less than $0.3\mu$m. Methods for achieving the surface roughness include a method using a sand blast and a method using a surface-roughening agent and are not limited to a specific one.

For example, as one of the above-described surface-roughening agents, it is possible to use a surface-roughening agent consisting of fine particles. As the surface-roughening agent consisting of fine particles, an inorganic filler and an organic filler are known. But the surface-roughening agent consisting of fine particles is not limited to a specific one, but it is possible to use any surface-roughening agent consisting of fine particles so long as it can be extrusion-molded together with the polyolefin resin.

As examples of the inorganic filler, carbonates such as calcium carbonate, magnesium carbonate, and barium carbonate; sulfates such as calcium sulfate, magnesium sulfate, barium sulfate; chlorides such as sodium chloride, calcium chloride, and magnesium chloride; oxides such as aluminum oxide, calcium oxide, magnesium oxide, zinc oxide, titanium oxide, and silica; and silicates such as talc, clay, and mica. Of these inorganic fillers, barium sulfate and aluminum oxide are preferable.

As the organic filler, resin particles having a higher crystal fusion peak temperature than a stretching temperature are preferable to prevent a filler from being melted at the stretching temperature. Crosslinked resin particles whose gel fraction is 4 to 10% are more favorable. As examples of the organic filler, it is possible to list thermoplastic resins such as ultra-high-molecular-weight polyethylene, polystyrene, polymethyl methacrylate, polycarbonate, polyethylene terephthalate, polybutylene terephthalate, polyphenylene sulfide, polysulfone, polyethersulfone, polyether ether ketone, polytetrafluoroethylene, polyimide, polyetherimide, melamine, benzoguanamin; and thermosetting resins. Of these organic fillers, the crosslinked polystyrene is especially preferable.

The average particle diameter of the surface-roughening agent is favorably 0.1 to $50\mu$m, more favorably 0.3 to $10\mu$m, and most favorably 0.5 to $5\mu$m. When the average particle diameter of the filler is less than $0.1\mu$m, owing to aggregation of the particles of the surface-roughening agent, the dispersibility thereof deteriorates. Thus nonuniform stretching is generated, and in addition the area of contact between the interface of thermoplastic resin and the surface-roughening agent increases, which makes it difficult to perform extrusion and adversely affect the formation of fine pores. On the other hand, when the average particle diameter of the surface-roughening agent exceeds $50\mu$m, it is difficult to thin the separator for the battery and in addition, the mechanical strength thereof deteriorates conspicuously, which is unpreferable.

The addition amount of the surface-roughening agent may be arbitrarily set in a range in which they do not inhibit the properties of the separator for the battery.
But in consideration of the moldability of an extruder, the addition amount of the surface-roughening agent is favorably 1 to 70 % by mass and more favorably 5 to 50 % by mass.

In the present invention, in addition to the polyolefin resin and the surface-roughening agent, known various additives, for example, the resin composition may contain an antioxidant and the like as necessary in a range of 0.01 to 5 % by mass.
As a method of producing the separator of the present invention for the battery composed of the above-described material components, it is possible to use a method of kneading the surface-roughening agent and polypropylene resin and dispersing them, roughening the surface thereof and making it porous by membranously extruding and stretching it.

This method effectively provides the separator for the battery excellent in its properties.

The method of using the surface-roughening agent can be used as a preferable method of roughening the surface of the separator for the battery. As another preferable method, a method of utilizing the β crystal of the polypropylene resin is available.

In the case where the β crystal of the polypropylene resin is utilized, it is important that the polypropylene resin has the β activity. The β activity degree is favorably not less than 20%, more favorably not less than 40%, and most favorably not less than 60%. When the β activity is not less than 20%, the ratio of the β crystal in an unstretched membrane material can be sufficiently increased. Thereby a large number of pores fine and homogeneous can be formed by stretching the membrane material, and the surface thereof is roughened. Consequently the obtained separator for the battery has a high mechanical strength, excellent air-permeable performance, and improved battery properties.

Whether the polypropylene resin has the β activity is determined according to whether a crystal melting peak temperature derived from the β crystal of the polypropylene resin is detected by performing differential thermal analysis of the separator for the battery with a differential scanning calorimeter.

More specifically after the temperature of the separator for the battery is raised from 25˚C to 240˚C at a scanning temperature of 10˚C/minute, the temperature is held at 240˚C for one minute. After the temperature of the separator for the battery is dropped from 240˚C to 25˚C at the scanning temperature of 10˚C/minute, the temperature is held at 240˚C for one minute. When the crystal melting peak temperature ($Tm\beta$) derived from the β crystal of the polypropylene resin is detected at re-raising of the temperature of the separator for the battery from 25˚C to 240˚C at the scanning temperature of 10˚C/minute, it is determined that the separator for the battery has the β activity.

The β activity indicating the β activity degree is computed based on an equation shown below by using a detected crystal melting heat amount ($\Delta Hm\alpha$) derived from α crystal of the polypropylene resin and a detected crystal melting heat amount ($\Delta Hm\beta$) derived from the β crystal.

$$\beta \text{ activity degree (\%)} = [\Delta Hm\beta/(\Delta Hm\beta + \Delta Hm\alpha)] \times 100$$

For example, in the case of homo-propylene, the β activity degree can be computed from the crystal melting heat amount ($\Delta Hm\beta$), derived from the β crystal, which is detected mainly in a range not less than 145˚C and less than 160˚C and from the crystal melting heat amount ($\Delta Hm\alpha$), derived from the α crystal, which is detected mainly in a range not less than 160˚C nor more than 175˚C. In the case of random polypropylene in which ethylene is copolymerized at 1 to 4 mol%, the β activity degree can be computed from the crystal melting heat amount ($\Delta Hm\beta$), derived from the β crystal, which is detected mainly in a range not less than 120˚C and less than 140˚C and from the crystal melting heat amount ($\Delta Hm\alpha$), derived from the α crystal, which is detected mainly in a range not less than 140˚C nor more than 165˚C.

It is favorable that the β activity is high. Specifically the β activity of the laminated porous film is favorably not less than 20%, more favorably not less than 40%, and most favorably not less than 60%. When the β activity is not less than 20%, a large amount of the β crystal of the polypropylene can be generated in the membrane material before the membrane material is stretched. Thereby pores fine and homogeneous can be formed by stretching the membrane material. Consequently the obtained separator for the battery has a high mechanical strength and an excellent air-permeable performance. The upper limit value of the β activity is not limited to a specific value. But the higher the β activity is, the more effectively the above-described effect is obtained. Therefore it is preferable that the upper limit of the β activity degree is as close as to 100%.

Whether the laminated porous film has the β activity can be also determined based on a diffraction profile obtained by conducting wide-angle X-ray diffraction measurement of the laminated porous film which has undergone specific heat treatment.

In detail, after the separator for the battery is thermally treated at 170 to 190˚C higher than the melting point of the polypropylene resin, it is gradually cooled to carry out the wide-angle X-ray diffraction measurement thereof in which the β crystal has been generated and grown. When a diffraction peak derived from a (300) plane of then β crystal of the polypropylene resin is detected in a range of $2\theta = 16.0˚ - 16.5˚$, it is determined that the separator for the battery has the β activity.

Regarding the detail of the β crystal structure of the polypropylene resin and the wide-angle X-ray diffraction measurement, it is possible to refer to Macromol. Chem. 187,643-652 (1986), Prog. Polym. Sci. Vol. 16,361-404 (1991), Macromol. Symp. 89,499-511 (1995), Macromol. Chem. 75,134 (1964), and reference documents listed in these documents. The method of evaluating the β activity is shown in detail in the examples of the present invention to be described later.

As methods of obtaining the β activity, it is possible to exemplify a method of forming the molten polypropylene resin at a high draft, a method of not adding a substance for accelerating the generation of the α crystal of the polypropylene resin to the resin composition, a method of adding the polypropylene resin treated to generate a peroxide radical to the resin composition, as described in Patent No. 3739481, and a method of adding the β crystal nucleating agent to the resin composition. It is especially preferable to obtain the β activity by adding the β crystal nucleating agent to the resin composition. By adding the β crystal nucleating agent to the resin composition, it is possible to accelerate the generation of the β crystal of the polypropylene resin homogeneously and efficiently and obtain the separator for the battery having a layer having the β activity.

<β Crystal Nucleating Agent>

The β crystal nucleating agent which can be used in the present invention, those shown below can be used. Provided that the generation and growth of the β crystal is increased, the β crystal nucleating agent is not limited to specific ones. Substances may be used by mixing not less than two kinds thereof with each other.

As the β crystal nucleating agent, it is possible to list iron oxide having a nano-scale size; alkaline metal salts or alkaline earth metal salts of carboxylic acid represented by 1,2-potassium hydroxystearate, magnesium benzoate, magnesium succinate, and magnesium phthalate; aromatic sulfonic acid compounds represented by sodium benzensulfonate and sodium naphthalene sulfonate; diesters or triesters of dibasic or tribasic carboxylic acid; phthalocyanine-based pigments represented by phthalocyanine blue; two-component compounds composed of a component A which is an organic dibasic acid and a component B which is oxides, hydroxides or salts of the IIA group metals of the Periodic Table; and compositions consisting of a cyclic phosphorous compound and a magnesium compound. Other kinds of the nucleating agent are described in Japanese Patent Application Laid-Open Nos. 2003-306585, 06-289566, and 09-194650. Above all, amide compounds represented by N,N'-dicyclohexyl-2,6-naphthalene dicarboxylic amide are preferable.

As examples of especially preferable β crystal nucleating agents, "Enujesuta-NU-100" produced by New Japan Chemical Co., Ltd. As examples of the polypropylene resin to which the β crystal nucleating agent is added, it is possible to list polypropylene "Bepol B-022SP" produced by Aristech Inc., "Beta (β) - PP BE60-7032" produced by Borealis Inc., and polypropylene "BNX BETA PP-LN" produced by Mayzo Inc are listed.

In the present invention, it is necessary to appropriately adjust the mixing ratio of the β crystal nucleating agent to be added to the polypropylene resin according to the kind of the β crystal nucleating agent or the composition of the polypropylene resin. It is favorable to use 0.0001 to 5.0 parts by mass of the β crystal nucleating agent, more favorable to add 0.001 to 3.0 parts by mass thereof, and most favorable to use 0.01 to 1.0 part by mass thereof for 100 parts by mass of the polypropylene resin. When the mixing ratio of the β crystal nucleating agent is less than 0.0001 parts by mass, it is impossible to secure the β crystal sufficiently. Thus when the membrane material is processed into the separator for the battery, it is difficult to display desired air-permeable performance and mechanical strength. On the other hand, when not less than 5.0 parts by mass of the β crystal nucleating agent is added to the polypropylene resin, the effect of the β crystal nucleating agent is little enhanced and is economically disadvantageous and in addition, there is a fear that the β crystal nucleating agent bleeds to the surface of the separator for the battery, which is unpreferable.

To secure the safety of the battery, it is preferable to form a lamination structure by adding a porous layer (hereinafter referred to as layer B) having the shutdown function to the layer A.

(Resin of Layer B)

The thermal property of the thermoplastic resin to be used for the layer B is important. Specifically it is preferable that the crystal fusion peak temperature is present in the range of 100 to 150˚C. The crystal fusion peak temperature is a peak value of a DSC crystal fusion temperature collected at a temperature-raising speed of 10˚C/minute by using a differential scanning calorimeter (DSC-7) produced by PerkinElmer Inc. The thermoplastic resin is not limited to a specific one, but any thermoplastic resins which satisfy the condition of the crystal fusion peak temperature can be used. In consideration of the use of the thermoplastic resin for the separator for the battery and from the standpoint of resistance to chemicals, polyolefin resins such as low-density polyethylene, high-density polyethylene, linear low-density polyethylene, ethylene-vinyl acetate copolymer, polypropylene, and polymethyl pentene are favorable. The polyethylene resin is especially favorable.

As examples of the polyethylene resin, low-density polyethylene, linear low-density polyethylene, linear ultra-low-density polyethylene, intermediate-density polyethylene, high-density polyethylene, and copolymers containing ethylene as the main component thereof are listed. That is, copolymers and multi-component copolymers consisting of ethylene and one or two kinds of co-monomers selected from among α-olefins, whose carbon number is 3 to 10, such as propylene, butene-1, pentene-1, hexane-1, heptene-1, and octane-1; vinyl ester such as vinyl acetate, vinyl propionate; unsaturated carboxylic acid ester such as methyl acrylate, ethyl acrylate, methyl methacrylate, and ethyl methacrylate; and unsaturated compounds such as conjugated diene, unconjugated diene. In addition it is possible to exemplify mixed compositions of the copolymers or the multi-component copolymers. The content of the ethylene unit of the ethylene polymers exceeds 50 mass%.

Of these polyethylene resins, one or more kinds of the polyethylene resin selected from among the low-density polyethylene, the linear low-density polyethylene, and the high-density polyethylene are favorable. The high-density polyethylene is most favorable.

Although the melt flow rate (MFR) of the polyethylene is not specifically limited, the melt flow rate thereof is set to favorably 0.03 to 15g/10 minutes and more favorably 0.3 to 10g/10 minutes. When the MFR is in the above-described range, the back pressure of an extruder does not become very high in a molding operation and thus a high productivity can be obtained. In the present invention, the MFR is measured in accordance with JIS K7210 in the condition where temperature is 190°C and a load is 2.16kg.

The method of producing the polyethylene resin is not limited to a specific one, but it is possible to exemplify known polymerization method using a known olefin polymerization catalyst, for example, a multi-site catalyst represented by a Ziegler-Natta type catalyst and a single-site catalyst represented by a Metallocene catalyst.

The layer B may contain other resins, other additives or other components, provided that the mixing amount thereof is in a range in which they do not inhibit the properties of the separator for the battery. Although not specifically limited, recycle resin which is generated from trimming loss such as a lug, inorganic particles such as silica, talc, kaolin, calcium carbonate, and the like, pigments such as titanium oxide, carbon black, and the like, a flame retardant, a weathering stabilizer, an antistatic agent, a crosslinking agent, a lubricant, plasticizer, an age resistor, an antioxidant, a light stabilizer, an ultraviolet ray absorber, a neutralizing agent, an antifog agent, an anti-blocking agent, a slip agent, wax, a nucleating agent, and a coloring agent are listed.

<Construction of Layer>

The construction of the separator of the present invention for the battery is described below.

From the standpoint of the improvement of the performance of the battery, the surface-roughened porous layer (hereinafter referred to as layer A), having not less than 0.3pm in the arithmetic average roughness Ra of the surface thereof, which contains the polypropylene resin as its main component is essential. In consideration of the safety of the battery, when the separator for the battery has the layer B, the construction of the layer of the separator for the battery is not limited to a specific one.

Regarding the number of layers, the simplest construction is a two-layer construction consisting of the layer A and the layer B.

The second simplest construction is a two-kind three-layer structure consisting of two outer layers and an inner layer. This construction is preferable. In the case of the two-kind three-layer structure, the layer A/the layer B/the layer A and the layer B/the layer A/the layer B can be adopted. As necessary, it is possible to form a three-kind three-layer structure by combining a layer having other function with the layer A and the layer B. In imparting other functions to the separator for the battery, the number of layers may be increased to four-layer, five-layer, six-layer, and seven-layer as necessary. As the layer construction, although the layer A/the layer B can be adopted, a symmetrical layer construction is preferable in consideration of the property of the separator for the battery. Therefore the form of the layer A/the layer B/the layer A is preferable.

<Production Method>

Although an example of the method of producing the separator of the present invention for the battery is described below, the present invention is not limited thereto.

Although the form of the separator for the battery may be plane or tubular, the plane shape is more favorable than the tubular shape because the former allows productivity (several products can be obtained widthwise from membrane material) to be high and the inner surface thereof to be coated.

As the method of producing the plane separator for the battery, it is possible to exemplify a production method of producing the biaxially stretched separator for the battery by melting resin by using an extruder, extruding it from a T-die, cooling it with a cast roll to solidify it, performing roll-stretching vertically, and performing tenter-stretching horizontally. Thereafter annealing and cooling steps are performed. It is also possible to use a method of making the separator for the battery produced by using a tubular method plane by cutting and opening it.

As an example, the simple two-kind three-layer structure is described below.

A method of laminating porous films one upon another, a method of layering films one upon another with an adhesive agent, a method of making unporous membrane materials porous after layering them one upon another, and a method of forming layered laminated unporous membrane materials by carrying out co-extrusion and thereafter making the laminated unporous membrane material porous. The co-extrusion is favorable from the standpoint of the simplicity of production steps and high productivity.

As the method of making the film porous, a stretching method is preferable from an environmental standpoint. But the stretching method may be combined with a solvent extraction method in dependence on a case. As the solvent extraction method, the method described in Patent No. 3050021 is exemplified. As the stretching method, a roll stretching method, a rolling process, a tenter stretching method, and a simultaneous biaxial stretching method are exemplified.

Monoaxial stretching or biaxial stretching is performed by using one of the above-described methods or in combination of not less than two of the above-described methods. The biaxial stretching is favorable in setting the arithmetic average roughness Ra, the ratio of $Ra_p/Ra_v$, and the mean peak spacing (Sm) of the surface of the separator for the battery to not less than 0.3μm, 0.80 to 1.20, and not less than 1.3μm respectively.

Description is made below on a preferable example of a method of forming an unporous multilayer membrane material having a two-kind three-layer structure in which the layer A composed of a resin composition containing the polypropylene resin and the β crystal nucleating agent as its main component is layered on the layer B composed of a resin composition containing the polyethylene resin as its main component by using co-extrusion by disposing the layer A at the outer layer side and thereafter biaxially stretching the obtained laminated unporous multilayer membrane material to make it porous.

(Formation of Resin composition of Layer A)

In forming the resin composition of the layer B, it is preferable to use the above-described polyolefin resin and the crystal nucleating agent. It is favorable to mix these components with each other with a Henschel mixerTM, a super mixer or a tumbler-type mixer. Alternatively all components are put in a bag and mixed with each other by hand. Thereafter the components are fused and kneaded with a monoaxial extruder, a twin screw extruder or a kneader to pelletize the mixture. It is more favorable to use the twin screw extruder.

(Formation of Resin composition of Layer B)

In forming the resin composition of the layer B, the thermoplastic resin consisting of the polyethylene resin and desired additives are mixed with one another with the Henschel mixerTM, the super mixer or the tumbler-type mixer. Thereafter the components are fused and kneaded with the monoaxial extruder, the twin screw extruder or the kneader to pelletize the components. It is favorable to use the twin screw extruder.

(Co-extrusion for Lamination and Stretching)

The pellet of the resin composition of the layer A and that of the resin composition of the layer B are supplied to each extruder to extrude them from a co-extrusion mouthpiece of a T-die. As the kind of the T-die to be used, both a multi-manifold type and a feed block type can be used.

Although the gap of the T die to be used is determined according to an ultimately necessary thickness of a film, a stretching condition, a draft ratio, and various conditions, the gap of the T die is set to normally 0.1 to 3.0mm and favorably 0.5 to 1.0mm. It is unpreferable to set the gap of the T die to less than 0.1mm from the standpoint of a production speed. When the gap of the T die is more than 3.0mm, the draft ratio becomes large, which is not preferable from the standpoint of stability in the production of the film.

Although the extrusion processing temperature in the extrusion molding is appropriately adjusted according to the flow property of the resin composition and the moldability thereof, the extrusion processing temperature is set to favorably 150 to 300˚C, more favorably 180 to 280˚C, and most favorably 200 to 280˚C. When the extrusion processing temperature is more than 150˚C, the fused resin has a sufficiently low viscosity and thus an excellent moldability is obtained, which is preferable. When the extrusion processing temperature is less than 300˚C, it is possible to restrain the resin composition from deteriorating. The temperature at which the membrane material is cooled to solidify it is very important in the present invention. The ratio of the β crystal in the membrane material can be adjusted. The cooling/solidifying temperature of the cast roll is set to not less than 80˚C, favorably 90˚C, more favorably 100˚C, and most favorably 120˚C. On the other hand, the lower limit of the cooling/solidifying temperature of the cast roll is set to favorably not more than 150˚C, more favorably not more than 140˚C, and most favorably not more than 130˚C. By setting the cooling/solidifying temperature of the cast roll to not less than 80˚C, the ratio of the β crystal in the membrane material solidified by cooling it can be sufficiently increased, which is preferable. By setting the cooling/solidifying temperature of the cast roll to not more than 150˚C, it is possible to prevent the occurrence of trouble that extruded fused resin adheres to the cast roll and sticks to it and thus efficiently process the resin composition into the membrane material, which is preferable.

In the stretching step, monoaxial stretching or biaxial stretching may be performed in a vertical direction or a horizontal direction. In performing the biaxial stretching, simultaneous biaxial stretching or sequential biaxial stretching may be performed. In forming the laminated porous film superior in its BD property intended by the present invention, it is possible to select a stretching condition at each stretching step. In the present invention, the sequential biaxial stretching capable of easily controlling the porous structure is more favorable.

In using the sequential biaxial stretching, although it is necessary to change a stretching temperature according to the composition of a resin composition to be used, the crystal melting peak temperature, and a crystallization degree.

The stretching temperature in the vertical stretching is set to 20 to 130˚C, favorably 40 to 120˚C, and more favorably 60 to 110˚C. The ratio in the vertical stretching is set to favorably 2 to 10 times, more favorably 3 to 8 times, and most favorably 4 to 7 times. By performing the vertical stretching in the above-described range, it is possible to prevent the film from being broken at a stretching time and generate a proper starting point of pores. The vertical stretching may be performed at one stage at a constant temperature or at a plurality of stages at different temperatures.

The stretching temperature in the horizontal stretching is set to 80 to 160˚C, favorably 90 to 150˚C, and more favorably 100 to 140˚C. The ratio in the horizontal stretching is set to favorably not less than 1.1 times, more favorably not less than 1.2 times, and most favorably not less than 1.5 times. On the other hand, the upper limit of the ratio in the horizontal stretching is set to favorably not more than 10 and more favorably not more than 8 times, and most favorably not more than 7 times. By performing the horizontal stretching in the above-described range, it is possible to moderately enlarge the starting point of pores formed by the vertical stretching and generate a fine porous structure. The stretching speed at the stretching step is set to favorably 500 to 12000%/minute, more favorably 1500 to 10000%/minute, and most favorably 2500 to 8000%/minute.

The biaxially stretched film obtained in the above-described procedure is heat-treated at 130 to 170˚C to improve the dimensional stability thereof. By uniformly cooling the laminated porous film after the heat treatment is carried out and winding it on a roll or the like, the separator of the present invention for the battery is obtained. At this time, relaxation treatment may be performed at a rate of 3 to 20% during the heat treatment step as necessary. By performing the heat treatment, the dimensional stability of the separator for the battery to heat becomes more favorable.

The properties of the separator of the present invention for the battery can be freely adjusted according to the kind of a resin, the kind of a selected filler, the kind of a plasticizer, the amount and composition ratio of components, and a stretching condition (stretching ratio, stretching temperature). The surface roughness of the polypropylene resin layer composing the outer layer can be freely adjusted according to the amount and kind of the surface-roughening agent and the kind and stretching condition of the plasticizer when the surface-roughening agent is used, and according to the amount and kind of the $\beta$ crystal nucleating agent and the kind and stretching condition of the plasticizer when the $\beta$ crystal nucleating agent is used.

(Thickness and Ratio among Layers)

The thickness of the separator of the present invention for the battery is 5 to 50$\mu$m, favorably 8 to 40pm, and most favorably 10 to 30pm. In using the membrane material as the separator for the battery, when the thickness thereof is less than 5$\mu$m, a large force is applied to a projected portion of an electrode, and there is a possibility that the separator for the battery is broken and short circuit occurs. When the thickness of the laminated porous film is more than 50$\mu$m, the electric resistance becomes high and thereby the battery has an insufficient performance.

Regarding the lamination ratio between the layer A and the layer B, the ratio of the thickness of the layer A to the entire lamination thickness is set to 10 to 90%, favorably 15 to 85%, and more favorably 20 to 80%. When the ratio of the thickness of the layer B to the entire lamination thickness is set to not more than 90%, the layer B is capable of sufficiently displaying its function. By setting the ratio of the thickness of the layer A to the entire lamination thickness to not more than 90%, the shutdown function can be sufficiently displayed and safety can be securely obtained.

When layers other than the layer A and the layer B are formed, the ratio of the total of the thicknesses of the other layers to the entire thickness of the laminated porous film is favorably 0.05 to 0.5 and more favorably 0.1 to 0.3, supposing that the entire thickness of the laminated porous film is 1.

The mass (basic weight) per 1$m^2$ can be used as a measure of the mass per unit area of the separator for the battery. The smaller is the numerical value of the basis weight, the smaller is the mass per unit area. Thus the basis weight can be preferably used as the measure of the mass per unit area of the separator for the battery. The measure of the basis weight is 3 to 20g/$m^2$, favorably 3 to 15g/$m^2$, and more favorably 3 to 10g/$m^2$.

(Gurley Value)

The Gurley value means the degree of difficulty in pass-through of air in the thickness direction of the film and is expressed by seconds it takes for air having a volume of 100ml to pass through the film. Therefore the smaller a numerical value of the Gurley value is, the more easily the air passes through the film. On the other hand, the larger the numerical value of the Gurley value is, the more difficultly the air passes therethrough. That is, the smaller the numerical value of the Gurley value is, the more intercommunicable pores are in the thickness direction of the film. On the other hand, the larger the numerical value of the Gurley value is, the less intercommunicable pores are in the thickness direction thereof. The intercommunicable property means the degree of connection between the pores in the thickness direction of the film.

The Gurley value of the separator of the present invention for the battery is made comparatively low to use it for various purposes. For example, in the case where the separator of the present invention for the battery is used as the separator of the non-aqueous lithium secondary battery, when the Gurley value is low, lithium ions move easily and thus the battery is excellent in its performance, which is preferable.

The Gurley value of the separator of the present invention for the battery is set to 10 to 1000 seconds/100ml, favorably 15 to 800 seconds/100ml, and more favorably 20 to 500 seconds/100ml. When the Gurley value is set to not more than 1000 seconds/100ml, the electric resistance is substantially low, which is preferable as the separator for the battery.

(Electric Resistance)

The electric resistance of the separator of the present invention for the battery at 25˚C is set to favorably not more than 100, favorably not more than 5.00, and more favorably not more than $3.0\Omega$. By setting the electric resistance of the membrane material to not more than $10\Omega$, the battery is capable of having sufficiently excellent performance when the battery is used at a room temperature.

When the electric resistance of the separator for the battery is low, an electric charge is capable of moving easily and thus the battery has excellent performance, which is preferable.

Although the lower limit of the electric resistance thereof is not limited to a specific value, the electric resistance thereof is set to favorably not less than $0.1\Omega$, more favorably not less than $0.2\Omega$, and most favorably not less than $0.3\Omega$. When the electric resistance thereof at 25˚C is not less than $0.1\Omega$, the separator for the battery is capable of preventing trouble such as an internal short circuit from occurring.

(Puncture strength)

The puncture strength of the separator for the battery is greatly related with the short circuit in the production of a battery and greatly contributes to the productivity thereof. The method of measuring the puncture strength is described below. The value of the puncture strength is set to not less than 1.5N, favorably not less than 2.0, and more favorably not less than 3.ON and is not related with the thickness of the separator. When the puncture strength is less than 1.5N, the generation probability of short circuit becomes high owing to breakage of the film caused by interference of foreign matters at the time of production of the battery, which is unpreferable.

On the other hand, although the upper limit value of the puncture strength is not specifically limited, the separator for battery having the puncture strength not more than 10N is normally used from the standpoint of handling.

(Arithmetic Average Roughness Ra)

As described above, it is most important that the arithmetic average roughness Ra of the surface of the separator of the present invention for the battery is set to not less than 0.3pm. It is preferable to set the arithmetic average roughness thereof to not less than 0.35pm.

As a result of the preparation of batteries by using the separators of the present invention therefor, it has been found that there occurs a difference in the cycle properties of the batteries in dependence on the arithmetic average roughnesses Ra of the separators therefor and that to set the arithmetic average roughness Ra to not less than $0.3\mu m$ is important. It is considered that when the arithmetic average roughness Ra is not less than 0.3pm, there is an increase in the number of electrolyte-stored portions on the surface of the separator and thereby the liquid-maintaining property of the electrolyte of the separator for the battery is improved, which greatly contributes to the improvement of the cycle property of the battery.

Although the upper limit of the arithmetic average roughness Ra is not limited to a specific value, it is preferable to set the upper limit thereof to not more than $0.8\mu m$. By setting the arithmetic average roughness Ra to not more than 0.8pm, it is possible to maintain the electrolyte-holding property sufficiently and especially preferable in using the separator for the battery which requires thickness accuracy, namely, the thin separator.

Means for setting the above-described arithmetic average roughness Ra to not less than 0.3pm can be exemplified from the standpoint of mixing of materials and a production method.

In the mixing of materials, means for setting the above-described arithmetic average roughness Ra to not less than 0.3pm are different according to a method of displaying the surface roughness degree. In using the surface-roughening agent, the particle diameter and addition amount of the surface-roughening agent are the main points for displaying the surface roughness degree. When the particle diameter of the surface-roughening agent is too small, the surface-roughening effect thereof is low. On the other hand, when the particle diameter of the surface-roughening agent is too large, a large number of unnecessary voids are generated, which is unpreferable. The particle diameter of the surface-roughening agent is set to favorably 0.1 to $50\mu m$, more favorably 0.3 to $10\mu m$, and most favorably 0.5 to $5\mu m$. Regarding the addition amount of the surface-roughening agent, when the addition amount thereof is too small, the surface-roughening effect of the surface-roughening agent is low. On the other hand, when the addition amount of the surface-roughening agent is too large, the moldability of the material of the separator for the battery is damaged. The addition amount of the surface-roughening agent is favorably 1 to 70 % by mass and more favorably 5 to 50 % by mass of the mass of the separator for the battery.

When the β crystal is used, the kind and amount of the crystal nucleating agent affect the β activity. Because the surface roughness degree affects the generation amount of the β crystal, the surface roughness degree depends on the degree of the β crystal. The higher the β activity is, the higher the surface roughness degree is. More specifically, in the case where a β crystal portion is present in a membrane material, the β crystal portion collapses. By stretching the membrane material, the collapsed portions interfere with one another and are connected to one another to generate fibril-like concavities and convexities in which the collapsed portions elliptically and complicatedly intertwine with one another. Thereby it is possible to secure the surface roughness degree of the separator of the present invention for the battery.

In the production method, the cooling/solidifying temperature of the cast roll is set to not less than 80˚C, favorably 90˚C, more favorably 100˚C, and most favorably 120˚C. By setting the cooling/solidifying temperature to not less than 80˚C, the ratio of the β crystal in the membrane material solidified by cooling it can be sufficiently increased, and concavities and convexities are preferably generated on the surface thereof by stretching it.

Regarding stretching, the main point is to stretch the material of the separator in at least a monoaxial direction. To stretch the material biaxially is more favorable. The stretching ratio in a horizontal direction is set to favorably not less than 1.1 times, more favorably not less than 1.2 times, and most favorably not less than 1.5 times. It is favorable to set the upper limit of the stretching ratio in the horizontal direction to not more than 10 times, more favorable not more than eight, and most favorable not more than seven. By horizontally stretching the material, surface roughening progresses and thus the arithmetic average roughness Ra can be easily set to not less than 0.3μm.

$$(Ra_p/Ra_v)$$

Regarding the arithmetic average roughness Ra of the separator of the present invention for the battery, it is important that the arithmetic average roughness $Ra_p$ is not less than 0.3μm and that the ratio of an arithmetic average roughness Rap of both surfaces of the separator for the battery in a longitudinal direction thereof to an arithmetic average roughness $Ra_v$ of both surfaces thereof in a width direction thereof, namely, the ratio of $Ra_p/Ra_v$ is 0.80 to 1.20. The ratio of $Ra_p/Ra_v$ is set to favorably 0.85 to 1.20 and more favorably 0.85 to 1.15. It is considered that the ratio of $Ra_p/Ra_v$ is an index indicating the degree of directional property.

As a result of the production of batteries by using the separators of the present invention therefor, it has been found that the cycle property of a battery having the arithmetic average roughness Ra of the separator not less than 0.3μm and the ratio of $Ra_p/Ra_v$ in the range of 0.80 to 1.2 is different from the cycle property of a battery having the arithmetic average roughness Ra of the separator and the ratio $Ra_p/Ra_v$ thereof out of the above-described range. Although the details are still unclear, it is considered that when the arithmetic average roughness Ra is not less than 0.3μm, there is an increase in the number of the electrolyte-stored portions on the surface of the separator and that when the $Ra_p/Ra_v$ is in the predetermined range, the directional property of roughness is small. That is, it is considered that the electrolyte-stored portions are isotropic. That is, it is considered that the electrolyte-holding property in the surface of the separator is not nonuniform, which greatly contributes to the improvement of the cycling characteristics of the battery.

(The mean peak spacing (Sm))

It is important that the mean peak spacing (Sm) of the separator of the present invention for the battery is not less than 1.3μm in at least one surface of the separator for the battery. The mean peak spacing (Sm) of the surface roughness of the separator is favorably not less than 1.4μm and more favorably not less than 1.5μm. It is considered that the mean peak spacing (Sm) is an index indicating the interval at which concavities and convexities of the surface roughness of the separator for the battery are generated.

As a result of the production of batteries by using the separators of the present invention therefor, it has been found that the cycle property of a battery in which the arithmetic average roughness Ra of the separator is not less than 0.3pm and the mean peak spacing (Sm) thereof is not less than 1.3μm is different from that of a battery in which the arithmetic average roughness Ra of the separator and the mean peak spacing (Sm) thereof are out of the above-described range. Although the details are still unclear, it is considered that when the arithmetic average roughness Ra of the separator is not less than 0.3pm, there is an increase in the number of the electrolyte-stored portions on the surface of the separator and that when the mean peak spacing (Sm) is in the predetermined range, there are intervals between the concavities and convexities of the roughness of the surface thereof, i.e., it is considered that the electrolyte-stored portions are present at certain intervals, and owing to the arithmetic average roughness Ra, a space can be securely obtained between the separator for the battery and the electrode. Consequently it is considered that the electrolyte-holding property between the electrode and the separator for the battery is not nonuniform, which greatly contributes to the improvement of the cycle property of the battery.

To set the mean peak spacing (Sm) to not less than 1.3, a stretching condition is the point. Biaxial stretching is especially preferable. By selecting the biaxial stretching, the value of the mean peak spacing (Sm) can be easily set to not less than 1.3. As the stretching ratio, the vertical stretching and the horizontal stretching are set to favorably not less than three times and not less than 1.5 times respectively. The area stretching ratio which is the product of the vertical stretching ratio and the horizontal stretching ratio is set to favorably not less than 6.0 times, more favorably not less than 7.0 times, and most favorably not less than 8.0 times.

Although the upper limit of the mean peak spacing (Sm) is not limited to a specific value, the upper limit thereof is set to favorably not more than $50\mu m$. When the upper limit thereof is not more than $50\mu m$, it is considered that a space can be securely obtained between the separator for the battery and the electrode.

(10-point Average Roughness Rz)

When the 10-point average roughness Rz of the separator of the present invention for the battery is not less than $5\mu m$, the electrolyte-holding property is sufficiently improved. Thereby it is considered that the properties of the battery are improved. The 10-point average roughness Rz is set to favorably 6 to $10\mu m$ and more favorably 6 to $8\mu m$. As a result of the production of batteries by using the separators of the present invention therefor, it has been found that there occurs a difference in the cycle properties of the batteries in dependence on the difference in the 10-point average roughnesses Rz of the separators and that to set the 10-point average roughness Rz of the separator for the battery to not less than $5\mu m$ is important. Although the details are still unclear, it is considered that when the 10-point average roughness Rz is not less than $5\mu m$, there is an increase in the number of the electrolyte-stored portions on the surface of the separator. That is, it is considered that the electrolyte-holding property is improved, which greatly contributes to the improvement of the cycle property of the battery.

Although the upper limit of the 10-point average roughness Rz is not limited to a specific value, the upper limit thereof is set to favorably not more than $10\mu m$ from the standpoint of thickness accuracy, although the thickness accuracy depends on the thickness of the separator. When the upper limit thereof is not more than $10\mu m$, it is possible to maintain the electrolyte-holding property sufficiently and especially preferable in using the separator for the battery which requires thickness accuracy, namely, the thin separator.

A method of setting the 10-point average roughness Rz to not less than $5\mu m$ is exemplified from the standpoint of mixing of materials. In the mixing of materials, the point for setting the 10-point average roughness Rz to not less than $5\mu m$ is different according to a method of displaying the surface roughness degree. In using fine particle surface-roughening agent, the particle diameter and addition amount of the fine particle surface-roughening agent are the main point. When the particle diameter of the fine particle surface-roughening agent is too small, the surface-roughening effect thereof is low. On the other hand, when the particle diameter of the fine particle surface-roughening agent is too large, a large number of unnecessary voids are generated, which is unpreferable. The particle diameter of the fine particle surface-roughening agent is set to favorably 0.1 to $50\mu m$, more favorably 0.3 to $10\mu m$, and most favorably 0.5 to $5\mu m$. Regarding the addition amount of the fine particle surface-roughening agent, when the addition amount thereof is too small, the surface-roughening effect thereof is low. On the other hand, when the addition amount of the fine particle surface-roughening agent is too large, the moldability of the material of the separator for the battery is damaged. The addition amount of the fine particle surface-roughening agent is set to favorably 1 to 70 % by mass and more favorably 5 to 50 % by mass of the mass of the separator for the battery.

When the β crystal is used, the kind and amount of the crystal nucleating agent affect the β activity. Because the surface roughness degree affects the generation amount of the β crystal, the surface roughness degree depends on the degree of the β crystal. The higher the β activity is, the higher the surface roughness degree is. More specifically, in the case where a β crystal portion is present in the membrane material, the β crystal portion collapses. By stretching the membrane material, the collapsed portions interfere with one another and are connected to one another to generate fibril-like concavities and convexities in which the collapsed portions elliptically and complicatedly intertwine with one another. Thereby it is possible to secure the surface roughness degree of the separator of the present invention for the battery.

In a secondary battery in which the negative electrode and the positive electrode capable of storing and discharging lithium are opposed to each other via the separator and which has a non-aqueous electrolyte containing a non-aqueous solvent and a lithium salt, the surface of the separator opposed to the negative electrode side of the battery and the surface thereof opposed to the positive electrode side thereof are different from each other in any one of the arithmetic average roughness Ra, maximum height Ry, and 10-point average roughness Rz of the separator. Thereby the secondary battery is allowed to have excellent properties such as the volume maintenance rate, output power property, low-temperature output power thereof.

(Arithmetic Average Roughness Ra)

It is preferable that an arithmetic average roughness $Ra_1$ of the separator for the battery at its negative electrode side is larger than an arithmetic average roughness $Ra_2$ of the separator for the battery at its positive electrode side.

Although the details are still unclear, owing to the above-described form, it is possible to produce a secondary battery excellent in its low-temperature properties.

The difference $\Delta Ra$ between the arithmetic average roughness $Ra_1$ of the separator for the battery at its negative electrode side and the arithmetic average roughness $Ra_2$ of the separator for the battery at its positive electrode side is set to favorably not less than 0.15μm, more favorably not less than 0.30pm, and most favorably not less than 0.40μm. When the difference $\Delta Ra$ is set to not less than 0.15μm, the battery has an improved low-temperature output power property which is one of its properties, which is preferable. By setting the difference $\Delta Ra$ to not less than 0.40pm, the battery has an improved output power property at low temperatures and in addition an improved output power property at a room temperature, which is preferable.

Although the upper limit of the difference $\Delta Ra$ is not limited to a specific value, it is preferable to set the upper limit thereof to not more than 10μm. To set the upper limit of the difference $\Delta Ra$ to not more than 10μm is preferable in uniformly producing the separators for the battery.

The arithmetic average roughness $Ra_1$ of the separator of the present invention for the battery at its negative electrode side is set to favorably not less than 0.30pm, more favorably not less than 0.35pm, and most favorably not less than 0.50μm.

As a result of the production of batteries by using the separators of the present invention therefor, it has been found that there occurs a difference in the cycle properties of the batteries in dependence on the difference in the arithmetic average roughnesses $Ra_1$ of the separators of the present invention for the battery at its negative electrode side and that to set the arithmetic average roughness $Ra_1$ of the separator for the battery at its negative electrode side to not less than 0.30μm is preferable. Although the details are still unclear, it is considered that by setting the arithmetic average roughnesses $Ra_1$ at its negative electrode side to not less than 0.30pm, there is an increase in the number of the electrolyte-stored portions on the surface of the separator. That is, it is considered that the electrolyte-holding property is improved, which greatly contributes to the improvement of the cycle property of the battery.

Although the upper limit of the arithmetic average roughness Ra of the separator of the present invention for the battery at its negative electrode side is not limited to a specific value, it is preferable to set the upper limit of the arithmetic average roughness Ra thereof to not more than 10μm. By setting the arithmetic average roughness Ra to not more than 10μm, it is possible to maintain the electrolyte-holding property sufficiently and especially preferable in using the separator for the battery which requires thickness accuracy, namely, the thin separator.

Means for setting the above-described arithmetic average roughness $Ra_1$ to not less than 0.30pm can be exemplified from the standpoint of mixing of materials and a production method.

In the mixing of materials, means for setting the above-described arithmetic average roughness Ra to not less than 0.3pm are different according to a method of displaying the surface roughness degree. In using the surface-roughening agent, the particle diameter and addition amount of the surface-roughening agent are the main points for displaying the surface roughness degree. When the particle diameter of the surface-roughening agent is too small, the surface-roughening effect thereof is low. On the other hand, when the particle diameter of the surface-roughening agent is too large, a large number of unnecessary voids are generated, which is unpreferable. The particle diameter of the surface-roughening agent is set to favorably 0.1 to 50pm, more favorably 0.3 to 10μm, and most favorably 0.5 to 5μm. Regarding the addition amount of the surface-roughening agent, when the addition amount thereof is too small, the surface-roughening effect of the surface-roughening agent is low. On the other hand, when the addition amount of the surface-roughening agent is too large, the moldability of the material of the separator for the battery is damaged. The addition amount of the surface-roughening agent is favorably 1 to 70 % by mass and more favorably 5 to 50 % by mass of the mass of the separator for the battery.

When the β crystal is used, the kind and amount of the crystal nucleating agent affect the β activity. Because the surface roughness degree affects the generation amount of the β crystal, the surface roughness degree depends on the degree of the β crystal. The higher the β activity is, the higher the surface roughness degree is. More specifically, in the case where a β crystal portion is present in a membrane material, the β crystal portion collapses. By stretching the membrane material, the collapsed portions interfere with one another and are connected to one another to generate fibril-like concavities and convexities in which the collapsed portions elliptically and complicatedly intertwine with one another. Thereby it is possible to secure the surface roughness degree of the separator of the present invention for the battery.

The main point in the production method is to monoaxially stretch the material of the separator. To stretch the material biaxially is more favorable. By stretching the material, surface roughening progresses and thus the arithmetic average roughness $Ra_1$ can be easily set to not less than 0.30pm.

(Maximum Height Ry)

It is preferable that a maximum height $Ry_1$ of the separator for the battery at its negative electrode side is larger than a maximum height $Ry_2$ of the separator therefor at its positive electrode side.

The difference $\Delta Ry$ between the maximum height $Ry_1$ of the separator for the battery at its negative electrode side and

the maximum height $Ry_2$ of the separator therefor at its positive electrode side is set to favorably not less than 1.8$\mu$m, more favorably not less than 5.0$\mu$m, and most favorably not less than 10$\mu$m. When the difference $\Delta Ry$ is set to not less than 1.8$\mu$m, the battery has an improved a low-temperature output power property which is one of its properties, which is preferable.

Although the upper limit of the difference $\Delta Ry$ is not specifically limited, it is preferable to set the upper limit thereof to not more than 50pm to uniformly produce the separators for battery.

The maximum height $Ry_1$ of the separator of the present invention for the battery at its negative electrode side is set to favorably not less than 10$\mu$m and more favorably not less than 14$\mu$m.

As a result of the production of batteries by using the separators of the present invention therefor, it has been found that there occurs a difference in the cycle properties of the batteries in dependence on the difference in the maximum height $Ry_1$ of the separators of the present invention for the battery at its negative electrode side and that to set the maximum height $Ry_1$ of the separator for the battery at its negative electrode side to not less than 10$\mu$m is preferable. Although the details are still unclear, it is considered that by setting the maximum height $Ry_1$ to not less than 10$\mu$m, there is an increase in the number of the electrolyte-stored portions on the surface of the separator. That is, it is considered that the electrolyte-holding property is improved, which greatly contributes to the improvement of the cycle property of the battery.

Although the upper limit of the maximum height $Ry_1$ of the separator at its negative electrode side is not limited to a specific value, it is preferable to set the upper limit thereof to not more than 50pm. By setting the upper limit of the maximum height $Ry_1$ to not more than 50pm, the electrolyte-holding property is sufficiently held and especially preferable in using the separator for the battery which requires thickness accuracy, namely, the thin separator.

(10-point Average Roughness Rz)

It is preferable that a 10-point average roughness $Rz_1$ of the separator of the present invention for the battery at its negative electrode side is set larger than a 10-point average roughness $Rz_2$ of the separator therefor at its positive electrode side.

The difference $\Delta Rz$ between the 10-point average roughness $Rz_1$ of the separator for the battery at its negative electrode side and the 10-point average roughness $Rz_2$ of the separator therefor at its positive electrode side is set to favorably not less than 3.0$\mu$m, more favorably not less than 5.0$\mu$m, and most favorably not less than 7.0$\mu$m. When the difference $\Delta Rz$ is set to not less than 3.0$\mu$m, the battery has an improved low-temperature output power property which is one of its properties, which is preferable.

Although the upper limit of difference $\Delta Rz$ is not specifically limited, it is preferable to set the upper limit thereof to not more than 30pm to uniformly produce separators for battery.

The 10-point average roughness $Rz_1$ of the separator of the present invention for the battery at its negative electrode side is set to favorably not less than 6.0$\mu$m and more favorably not less than 10$\mu$m.

As a result of the production of batteries by using the separators of the present invention therefor, it has been found that there occurs a difference in the cycle properties of the batteries in dependence on the difference in the 10-point average roughness $Rz_1$ of the separator of the present invention for the battery at its negative electrode side and that to set the 10-point average roughness $Rz_1$ of the separator of the present invention for the battery at its negative electrode side to not less than 6.0$\mu$m is preferable. Although the details are still unclear, it is considered that by setting the 10-point average roughness $Rz_1$ to not less than 6.0$\mu$m, there is an increase in the number of the electrolyte-stored portions on the surface of the separator. That is, it is considered that the electrolyte-holding property is improved, which greatly contributes to the improvement of the cycle property of the battery.

Although the upper limit of the 10-point average roughness $Rz_1$ of the separator at its negative electrode side is not limited to a specific value, it is preferable to set the upper limit thereof to not more than 30pm. By setting the upper limit of the maximum height $Ry_1$ to not more than 30$\mu$m, the electrolyte-holding property is sufficiently held and especially preferable in using the separator for the battery which requires thickness accuracy, namely, the thin separator.

It is especially favorable that the range of not less than two of the $\Delta Ra$, $\Delta Ry$, and the $\Delta Rz$ is simultaneously satisfied. It is more favorable that the range of all of the $\Delta Ra$, $\Delta Ry$, and the $\Delta Rz$ is satisfied. By satisfying the range of not less than two of the $\Delta Ra$, $\Delta Ry$, and the $\Delta Rz$, it is possible to sufficiently improve the output power characteristic.

(Bubble Point Pore Diameter)

A bubble point pore diameter dBP of the separator of the present invention for the battery is set to 0.001 to 0.1$\mu$m, favorably 0.01 to 0.07$\mu$m, and more favorably 0.01 to 0.05$\mu$m. When the bubble point pore diameter dBP is not less than 0.001$\mu$m, there is not fear that the separator for the battery is clogged. When the bubble point pore diameter dBP is not more than 0.001$\mu$m, the performance of the battery does not deteriorate because pore diameters are not nonuniform and thus the inside of the battery does not become nonuniform.

As the performance of the battery becomes higher, uniformity is increasingly demanded for the porous structure of the separator for the battery. That is, from the standpoint of the stability and uniformity of the battery, it is considered that to make the bubble point pore diameter small in a range in which the migration of lithium ions is not intercepted is preferable when the bubble point pore diameter is larger than 0.1$\mu$m.

(BD Property)

One of the characteristics of the separator of the present invention for the battery is that the polypropylene resin used in the layer A has a high heat resistance. This characteristic contributes to safety when the membrane material of the present invention is used as the separator for the battery. This heat resistance is a function (break-down property) of separating the positive and negative electrodes from each other so that the film prevents direct contact between the positive and negative electrodes. It is preferable that the polypropylene resin has heat resistance up to a possible high temperature (not less than 160˚C). In using the porous film as the separator for the battery, it is necessary for the porous film to have heat resistance at a high temperature.

(Non-aqueous Lithium Secondary Battery)

In the non-aqueous lithium secondary battery using the separator for the battery, the negative electrode and the positive electrode capable of storing and discharging lithium are opposed to each other via the separator. The non-aqueous lithium secondary battery has a non-aqueous electrolyte containing a non-aqueous solvent and a lithium salt. As the properties of the non-aqueous electrolyte, the non-aqueous electrolyte may be a liquid, a solid electrolyte or a gel electrolyte. The non-aqueous electrolyte used not for the separator for the battery, the positive electrode, and the negative electrode are described below.

[Non-aqueous Electrolyte]

<Non-aqueous Solvent>

As the non-aqueous solvent of the electrolyte to be used for the non-aqueous lithium secondary battery of the present invention, any desired known solvents can be used for the non-aqueous lithium secondary battery. For example, cyclic carbonate (preferably alkylene carbonate having carbon number of 3 to 5) such as alkylene carbonate including ethylene carbonate, propylene carbonate, and butylene carbonate; chain carbonate including such as dialkyl carbonate (preferably dialkyl carbonate having alkyl group whose carbon number is 1 to 4) including dimethyl carbonate, diethyl carbonate, di-n-propylene carbonate, and ethylmethyl carbonate; cyclic ether such as tetrahydrofuran and 2-methyl tetrahydrofuran; chain ether such as dimethoxyethane and dimethoxymethane; cyclic carboxylic ester such as $\gamma$-buty-rolactone and $\gamma$-valerolactone; and chain carboxylic ester such as methyl acetate, methyl propionate, and ethyl propionate are listed. These non-aqueous solvents may be used singly or in combination of not less than two kinds.
Of the above-exemplified solvents, a mixed non-aqueous solvent of the cyclic carbonate and the chain carbonate is preferable from the standpoint that it enhances the performance of the battery such as the charge-discharge properties and the life thereof. It is preferable to mix the cyclic carbonate and the chain carbonate with each other so that the mixed non-aqueous solvent contains not less than 15 % by volume of each of the cyclic carbonate and the chain carbonate of the entire non-aqueous solvent and that the total of the cyclic carbonate and the chain carbonate is not less than 70 % by volume of the entire non-aqueous solvent.
As the cyclic carbonate to be contained in the mixed non-aqueous solvent consisting of the cyclic carbonate and the chain carbonate, alkylene carbonate in which the carbon number of the alkylene group is not less than two nor more than four is preferable. As examples the alkylene carbonate, ethylene carbonate, propylene carbonate, and butylene carbonate are listed. Of these alkylene carbonates, the ethylene carbonate and the propylene carbonate are preferable.
As the chain carbonate to be contained in the mixed non-aqueous solvent consisting of the cyclic carbonate and the chain carbonate, dialkyl carbonate having an alkyl group whose carbon number is not less than one nor more than four is preferable. As examples of the dialkyl carbonate, dimethyl carbonate, diethyl carbonate, di-n-propylene carbonate, ethyl methyl carbonate, methyl-n-propyl carbonate, ethyl-n-propyl carbonate are listed. Of these chain carbonates, the dimethyl carbonate, the diethyl carbonate, and the ethyl methyl carbonate are preferable.
These cyclic carbonates and the chain carbonates may be used singly or in combination of a plurality of kinds and at a desired mixing ratio.
The ratio of the cyclic carbonate to the mixed non-aqueous solvent is set to not less than 15 % by volume and favorably 20 to 50 % by volume and that of the chain carbonate to the mixed non-aqueous solvent is set to not less than 30 % vol and favorably 40 to 80 % by volume. It is preferable that the cyclic carbonate: the chain carbonate = 1:1 to 4 (volume ratio).

The mixed non-aqueous solvent may contain solvents other than the cyclic carbonate and the chain carbonate, provided that the other solvents are contained in the mixed non-aqueous solvent in a range in which they do not deteriorate the performance of the non-aqueous lithium secondary battery to be produced. The ratio of the solvents other than the cyclic carbonate and the chain carbonate to be contained in the mixed non-aqueous solvent to the mixed non-aqueous solvent is not more than 30 % by volume and preferably not more than 10 % by volume.

<Lithium Salt>

As the lithium salts which are solutes of the non-aqueous electrolyte, desired ones can be used. For example, inorganic lithium salts such as $LiClO_4$, $LiPF_6$, $LiBF_4$; and organic lithium fluorides such as $LiCF_3SO_3$, $LiN(CF_3SO_2)_2$, $LiN(C_2F_5SO_2)_2$, $LiN(C_F3SO_2)$ $(C_4F_9SO_2)$ , LiC ( $(CF_3SO_2)_3$, $LiPF_4(C_2F_5)_2$, $LiPF_4(CF_3SO_2)_2$, $LiPF_4(C_2F_5SO_2)_2$, $LiBF_2$ $(CF_3)_2$, $LiBF_2(C_2F_5)_2$, $LiBF_2(CF_3SO_2)_2$, and $LiBF_2(C_2F_5SO_2)_2$ are listed. Of these lithium salts, the inorganic lithium salts such as the $LiPF_6$ and the $LiBF_4$; and the organic lithium fluorides such as $LiCF_3SO_3$, $LiN(CF_3SO_2)_2$, and LiN $(C_2F_5SO_2)_2$ are favorable. The $LiPF_6$ and the $LiBF_4$ are especially favorable. The lithium salts may be also used singly or in combination of not less than two kinds.

The lower limit value of the concentration of the lithium salts in the non-aqueous electrolyte is not less than 0.5 $mol/dm^3$ and favorably 0.75 $mol/dm^3$. The upper limit value of the concentration of the lithium salts in the non-aqueous electrolyte is not more than 2 $mol/dm^3$ and favorably 1.5 $mol/dm^3$. When the concentration of the lithium salt exceeds the upper limit value, the viscosity of the non-aqueous electrolyte becomes high, and the electrical conductivity thereof decreases. When the concentration of the lithium salt is less than the lower limit value, the electrical conductivity thereof decreases. Thus it is preferable to prepare the non-aqueous electrolyte in the above-described concentration range.

<Other Additives>

The non-aqueous electrolyte of the present invention may contain a film-forming agent capable of forming a resistant film on the surface of the negative electrode. As the film-forming agent to be used in the present invention, carbonate compounds having ethylene unsaturated bond such as vinylene carbonate, vinyl ethylene carbonate, fluoroethylene carbonate, trifluoropropylene carbonate, and phenylethylene carbonate; and carboxylic acid anhydrides such as succinic anhydride, glutanic anhydride, maleic anhydride, citraconic anhydride, gultaconic anhydride, itaconic anhydride, diglycolic anhydride, cyclohexandicarboxylic anhydride, cyclopentanetetracarboxylic dianhydride, and phenylsuccinic anhydride are listed. From the standpoint of a preferable effect of improving the cycle property and the dependence of the film resistance on temperature, as the film-forming agent, the vinylene carbonate, the vinyl ethylene carbonate, and the succinic anhydride are favorable. The vinylene carbonate is more favorable because it is capable of forming a good-quality film. These film-forming agents may be used singly or by mixing not less than two kinds thereof with each other.

In the present invention, the content of the film-forming agent in the non-aqueous electrolyte is set to not less than 0.01 % by mass, favorably not less than 0.1 % by mass, and more favorably not less than 0.3 % by mass. The upper limit of the content thereof is set to not more than 10 % by mass, favorably not more than 8 % by mass, and more favorably not more than 7 % by mass. When the content of the film-forming agent is less than the lower limit of the above-described range, it is difficult to obtain the effect of improving the cycle property of the battery. On the other hand, when the content of the film-forming agent is more than the upper limit of the above-described range, there is a fear that the rate property at a low temperature deteriorates.

In addition to the non-aqueous solvent, the lithium salt, and the film-forming agent, as necessary, the non-aqueous electrolyte of the present invention may contain various known additives such as a positive-electrode protecting agent, an overcharge inhibitor, a dehydration agent, a deoxidizing agent, and the like such as ethylene sulfite, propylene sulfite, dimethyl sulfite, propane sultone, bitan sultone, methyl methanesulfonate, toluene methanesulfonate, dimethyl sulfate, ethylene sulfate, sulfolane, dimethyl sulfone, diethyl sulfone, dimethylsulfoxide, diethylsulfoxide, tetramethylenesulfoxide, diphenylsulfide, thioanisole, diphenyl disulfide, and dipyridinium disulfide.

[Positive Electrode]

As the positive electrode, normally an active substance layer, containing a positive active substance and a binder, which is formed on an current collector is used.

The kind of the positive active substance is not limited to a specific one so long as the positive active substance is capable of electrochemically storing and discharging lithium ions. As a preferable example, lithium transition metal complex oxides are used. As examples of the lithium transition metal complex oxides, lithium-cobalt complex oxides such as $LiCoO_2$; lithium-nickel complex oxides such as $LiNiO_2$; and lithium-manganese complex oxides such as $LiMnO_2$

and $LiMn_2O_4$ are listed. By substituting a part of transition metal atoms with other metals such as Al, Ti, V, Cr, Mn, Fe, Co, Li, Ni, Cu, Zn, Mg, Ga, Zr, and Si, these lithium transition metal complex oxides can be stabilized, which is preferable. These positive active substances may be used singly or in combination of not less than two kinds and at a desired ratio.

The binder is not limited to a specific one, but it is possible to use any of materials stable for a solvent to be used in producing the electrode, and for an electrolyte or other materials to be used in the battery.

As examples of the binder, polyvinylidene fluoride, polytetrafluoroethylene, fluorinated polyvinylidene fluoride, EPDM (ethylene-propylene-diene terpolymer), SBR (styrene-butadiene rubber), NBR (acrylonitrile-butadiene rubber), fluororubber, polyvinyl acetate, polymethyl methacrylate, polyethylene, and nitrocellulose are listed. These materials may be used singly or in combination of not less than two kinds.

As the ratio of the binder in the positive active substance, the lower limit thereof is set to not less than 0.1 % by mass, favorably not less than 1 part by mass, and more favorably not less than 5 parts by mass; and the upper limit thereof is set to not more than 80 % by mass, favorably not more than 60 part by mass, more favorably not more than 40 parts by mass, and most favorably not more than 10 parts by mass. When the mixing ratio of the binder is small, the active substance cannot be sufficiently retained. Thereby the positive electrode lacks its mechanical strength, which may deteriorate the performance of the battery such as its cycle property. On the other hand, when the mixing ratio of the binder is too large, the battery capacity and conductivity become decrease.

The positive active substance contains a conductive agent to enhance the conductivity. As the conductive agent, it is possible to list fine particles of graphite such as natural graphite and artificial graphite; carbon black such as acetylene black; amorphous fine particles of carbon such as needle coke; and carbonaceous materials such as carbon fiber, carbon nanotube, and fullerene. These conductive agents may be used singly or in combination of not less than two kinds.

As the ratio of the conductive agent in the positive active substance, the lower limit thereof is set to not less than 0.01 % by mass, favorably not less than 0.1 % by mass, and more favorably not less than 1 part by weight; and the upper limit thereof is set to not more than 50 % by mass, favorably not more than 30 % by mass, and more favorably not more than 15 % by mass. When the ratio of the conductive agent is small, the conductivity may become insufficient. On the other hand, when the ratio of the conductive agent is too large, the battery capacity may decrease.

Additives such as a thickener to be contained in an active substance layer can be contained in the positive active substance layer. The thickener is not limited to a specific one so long as it is stable for the solvent and the electrolyte to be used in producing the electrode and other materials to be used in using the battery. As examples of such additives, carboxyl methyl cellulose, methyl cellulose, hydroxy methyl cellulose, ethyl cellulose, polyvinyl alcohol, oxidized starch, phosphatized starch, and casein are listed. These thickeners may be used singly or in combination of not less than two kinds.

Aluminum, stainless steel, and nickel-plated copper are used as the positive electrode current collector.

The positive electrode can be formed by applying a mixture of the positive active substance, the binder, the conductive agent, and additives used as necessary to an current collector after the mixture is slurried by using a solvent and drying the solvent. As solvents to be used to slurry the mixture, organic solvents for dissolving the binder are used. For example, N-methyl pyrrolidone, dimethyl formamide, dimethyl acetamide, methyl ethyl ketone, cyclohexanone, methyl acetate, methyl acrylate, diethyltriamine, N,N-dimethylaminoproylamine, ethylene oxide, and tetrahydrofuran are used. But the organic solvents are not limited to these substances. These substances may be used singly or in combination of a plurality of kinds. It is possible to slurry the active substance with latex such as SBR by adding a dispersing agent, a thickener, and the like to water.

The thickness of the positive active substance layer formed as described above is normally 10 to 200pm.

It is preferable to consolidate the active substance layer obtained by application and drying by using a roller press or the like to increase the charged density of the active substance.

[Negative Electrode]

As the negative electrode, normally an active substance layer, containing a negative active substance and a binder, which is formed on the current collector is used.

The kind of the negative active substance is not limited to a specific one so long as the negative active substance is capable of electrochemically storing and discharging lithium ions. As preferable examples, it is possible to use carbonaceous materials such as a pyrolyzed material of organic materials formed in various thermal decomposition conditions, artificial graphite, natural graphite, and the like capable of electrochemically storing and discharging lithium; a lithium metal; and various lithium alloys. These negative active substances may be used singly or in combination of not less than two kinds thereof. Of the above-described negative active substances, as the negative active substances to be used in combination of the separator of the present invention for the battery, the carbonaceous materials such as the artificial graphite, the natural graphite, the metal oxide materials, and various lithium alloys are preferable because these negative active substances improve the battery properties.

The binder is not limited to a specific one. It is possible to use any of materials stable for a solvent and an electrolyte to be used in producing the electrode and other materials to be used when the battery is used. As examples of the binder, polyvinylidene fluoride, polytetrafluoroethylene, SBR (styrene-butadiene rubber), isoprene rubber, and butadiene rubber are listed. These binders may be used singly or in combination of not less than two kinds.

As the ratio of the binder in the negative active substance, the lower limit thereof is set to not less than 0.1 % by mass, favorably not less than 1 part by mass, and more favorably not less than 5 parts by mass. The upper limit thereof is set to not more than 80 % by mass, favorably not more than 60 part by mass, more favorably not more than 40 parts by mass, and most favorably not more than 10 parts by mass. When the mixing ratio of the binder is small, the active substance cannot be sufficiently retained. Thereby the negative electrode lacks its mechanical strength, which may deteriorate the performance of the battery such as its cycle property. On the other hand, when the mixing ratio of the binder is too large, the battery capacity and conductivity become decrease.

Additives such as a thickener to be contained in an active substance layer can be contained in the negative active substance layer. The thickener is not limited to a specific one so long as it is safe for the solvent and the electrolyte to be used in producing the electrode and other materials to be used in using the battery. As examples of additives, carboxyl methyl cellulose, methyl cellulose, hydroxy methyl cellulose, ethyl cellulose, polyvinyl alcohol, oxidized starch, phosphatized starch, and casein are listed. These thickeners may be used singly or in combination of not less than two kinds.

As the current collector of the negative electrode, copper, nickel, stainless steel, and nickel-plated steel are used. The negative electrode can be formed by applying a mixture of the negative active substance, the binder, and additives added as necessary to the current collector after the mixture is slurried by using the solvent and drying the solvent. As solvents to be used to slurry the mixture, organic solvents for dissolving the binder are used. For example, N-methyl pyrrolidone, dimethyl formamide, dimethyl acetamide, methyl ethyl ketone, cyclohexanone, methyl acetate, methyl acrylate, diethyltriamine, N,N-dimethylaminoproylamine, ethylene oxide, and tetrahydrofuran are used. But the organic solvents are not limited to these substances. These substances may be used singly or in combination of a plurality of kinds. It is possible to slurry the active substance with the latex such as the SBR by adding the dispersing agent, the thickener, and the like to water.

The thickness of the active substance layer formed in the above-described method is normally 10 to 200$\mu$m. It is preferable to consolidate the active substance layer to be obtained by application and drying by using a roller press to enhance the filling density of the active substance.

[Construction of Battery]

The non-aqueous lithium secondary battery of the present invention is produced by assembling the above-described positive electrode, negative electrode, non-aqueous electrolyte, and separator for the battery in a proper configuration. It is possible to use other constituent elements such as a sheathing case as necessary.

The battery configuration is not limited to a specific one, but any desired configuration can be appropriately selected from among various configurations generally adopted according to a use. As examples of configurations generally adopted, a cylinder type in which the sheet electrodes and the separator for the battery are spirally wound, a cylinder type having an inside out construction in which a pellet electrode and the separator for the battery are combined with each other, a coin type in which the pellet electrode and the separator for the battery are layered on each other, and a laminate type in which the sheet electrodes and the separator for the battery are layered on each other are listed. A method of assembling the battery is not limited to a specific one either, but any desired method can be appropriately selected from among various methods generally adopted according to the configuration of a battery to be produced.

In assembling the battery, the negative electrode and the positive electrode are opposed to each other via the separator, for the battery, in which layers are different from each other in at least one of the arithmetic average roughness Ra, the maximum height Ry, and the 10-point average roughness Rz. At this time, it is preferable to dispose a layer having a larger value in any one of the arithmetic average roughness Ra, the maximum height Ry, and the 10-point average roughness Rz at the negative electrode side. Although the details are still unclear, this construction noticeably improves the output power property of the battery and thus contributes to the production of the secondary battery having excellent properties.

By layering a plurality of separators having different surface roughnesses one upon another as necessary, the surface roughness of the positive electrode side and that of the negative electrode side may be different from each other. It is also possible to use one separator for the battery in which the surface roughness of the upper layer and that of the lower layer are different from each other.

The embodiments of the non-aqueous lithium secondary battery of the present invention has been described above. But the non-aqueous lithium secondary battery of the present invention is not limited to the above-described embodiment. It is possible to make modifications unless the modifications depart from the gist of the present invention.

EXAMPLES

The examples and comparison examples of the present invention are shown below.
The separator of the present invention for the battery and the non-aqueous lithium secondary battery thereof are described in detail below based on the examples. But the present invention is not limited thereto.
Measured values shown in the examples and the comparison examples and evaluations are as described below.
A pick-up (flow) direction in which the separator for the battery is picked up is described as a "vertical" direction, whereas a direction perpendicular to the "vertical" direction is described as a horizontal direction.

(1) Thickness

The in-plane thickness was measured at unspecified 30 points with a dial gauge of 1/1000mm. The average of the thicknesses was set as the thickness.

(2) Ratio among layers

The ratio among layers was measured by cutting out a section of the separator for the battery and observing the section with an SEM.

(3) Gurley value

The Gurley value (second/100ml) was measured in accordance with JIS P8117.

(4) Puncture strength

The puncture strength was measured in accordance with Japan Agricultural Standards Notice No. 1019 (conditions: pin diameter was 1.0mm, tip was 0.5R, piercing speed: 300mm/minute)

(5) Bubble point pore diameter

A perm porometer (500PSI type produced by PMI Co., Ltd.) was used.
(6) Arithmetic average roughness Ra (in accordance with JIS B0601-1994)
A separator for the battery was cut out in a length of 10mm (width) $\times$ 50mm (length). The obtained separator for the battery was bonded to a double-stick tape (double-stick tape "No. 501F" produced by NITTO DENKO Corporation, 5mm (width) $\times$ 20m (length)) stretched in parallel with a glass plate (micro-slide glass S1225 produced by MATSUNAMI GLASS IND. LTD., 76mm $\times$ 26mm) by spacing the double-stick tape at not less than 15mm from the glass plate. At that time, the separator for the battery was fixed without direct contact between the central portion thereof and the glass plate owing to the presence of the double-stick tape.
The surface roughness of the sample placed in this state was measured with a laser microscope (VK-8500 produced by KEYENCE CORPORATION). At that time, the range in which the surface roughness of the sample was measured was 110$\mu$m $\times$ 150$\mu$m. The surface roughness was measured five times at different positions. The average value of calculated arithmetic average roughnesses Ra was set as the arithmetic average roughness Ra of the separator for the battery.

(7) BD property

Separator for battery were cut squarely in a dimension of 80mm. With each separator for the battery being sandwiched between a Teflon (registered trademark) film having a hole formed at its central portion and an aluminum plate, the periphery of the separator was fixed with clips. Each film sample was put in an oven whose temperature was set to 180˚C. Each film was taken out of the oven two minutes after the temperature of the oven reached a set temperature again to check the state of the separators for the battery and determine the configuration-maintaining performance. Separators for the battery which were destroyed were marked with "$\times$". Separators which maintained the original configuration thereof were marked with "$\bigcirc$". The oven used was Tabai gear oven "GPH200" produced by Tabai Espec Corporation.
The $\beta$ activities of the obtained separators for the battery were evaluated as described below.

(8) Measurement of differential scanning calorimetry (DSC)

By using a differential scanning calorimeter (DSC-7) produced by PerkinElmer Inc., each of the obtained separators for the battery was heated from 25˚C up to 240˚C at a scanning speed of 10˚C/minute and held for one minute. Thereafter the separators for battery were cooled from 240˚C down to 25˚C at the scanning speed of 10˚C/minute and held for one minute. Thereafter the separators for the battery were heated again from 25˚C up to 240˚C at the scanning speed of 10˚C/minute. When the separators for the battery were heated again, whether the β activity was present or not was evaluated as follows according to whether a peak was detected in the range of 145˚C to 160˚C which is the crystal melting peak temperature (Tmβ) derived from the β crystal of the polypropylene resin.

○: separators in which Tmβ was detected in the range of 145˚C to 160˚C (β activity was present).
✕: separators in which Tmβ was not detected in the range of 145˚C to 160˚C (β activity was not present) .
The β activity was measured on specimens having a weight of 10mg in a nitrogen atmosphere.

(9) Wide-angle X-ray diffraction measurement (XRD)

Separators for the battery were cut out squarely in the dimension of 60mm (vertical length) x 60mm (horizontal length) and fixed, as shown in Figs. 1(A) and 1(B).
Samples of the separators for the battery fixed to two aluminum plates were put in a blow isothermal instrument (Model: DKN602 produced by Yamato Science Corporation) having a set temperature of 180˚C and display temperature of 180˚C and held for three minutes. Thereafter the set temperature was altered to 100˚C, and the samples were gradually cooled to 100˚C for not less than 10 minutes. When the display temperature became 100˚C, the samples were taken out of the blow isothermal instrument. Thereafter the samples were cooled for five minutes in an atmosphere having a temperature of 25˚C with the samples bound with the two aluminum plates. Thereafter wide-angle X-ray diffraction measurement was carried out on the separators for the battery at a portion of a 40mmø circular portion disposed at the central portion of the aluminum plate in the following measuring conditions.

■ Wide-angle X-ray diffraction measuring apparatus: Model Number: XMP18A produced by Mac science Co., Ltd.
■ X-ray source: CuKα ray, output: 40kV, 200mA
■ Scanning method: 2θ/θ scan, 2θ range: 5˚ to 25˚, scanning interval: 0.05˚, scanning speed: 5˚/minute

Based on the obtained diffraction profile, the presence and nonpresence of the β activity were evaluated from a peak derived from the (300) surface of the β crystal of polypropylene resin.
○: Separators in which the peak was detected in the range of 2θ = 16.0˚ to 16.5˚ (separator had β activity)
✕: Separators in which the peak was not detected in the range of 2θ = 16.0˚ to 16.5˚ (separator did not have β activity)
When the separator for the battery cannot be cut out squarely in the dimension of 60mm × 60mm, samples may be prepared by setting it at the 40mmø circular hole disposed at the central portion of the aluminum plate.

Examples are described in detail below.

Initially examples 1-1 through 1-3, reference examples 1-1 and 1-2, and a comparison example 1-1 are described below.

(Example 1-1)

Polypropylene resin ("300SV" produced by Prime Polymer Corporation, density: 0.90g/cm³, MFR: 3.0g/10 minutes, Tm: 167˚C) and N,N'-dicyclohexyl-2,6-naphthalene dicarboxylic amide serving as the β crystal nucleating agent were prepared. 0.2 parts by mass of the β crystal nucleating agent was blended with 100 parts by mass of the polypropylene resin. After the components were supplied to a twin screw extruder (diameter: 40mmø, L/D:32) produced by Toshiba Machine Co., Ltd and fused and mixed with each other at a set temperature of 300˚C, a strand was cooled and solidified in a water bath and cut by a pelletizer to prepare a pellet of the polypropylene resin. The β activity of the polypropylene resin composition was 80%.
As the mixed resin composition composing the layer B, 0.04 parts by mass of glycerol monoester and 10 parts by mass of microcrystalline wax ("Hi-Mic 1080" produced by Nippon Seiro Co., Ltd.) were added to 100 parts by mass of high-density polyethylene (Novatec HD HF560 produced by Japan Polyethylene Corporation, density: 0.963g/cm³, MFR: 7.0g/10 minutes). The above-described three components were fused and kneaded at 220˚C by using the same-type same-direction twin screw extruder to obtain a pelletized resin composition.
The above-described two kinds of the materials were extruded from die for a two-kind three-layer structure by using different extruders in which the outer layers were composed of the layer A and the inner layer was composed of the layer B. Thereafter the materials were cooled to solidify them by using a casting roll at 125˚C to prepare a membrane material.

The membrane material was stretched 4.3 times longer than its original length in the vertical direction by using a vertical stretching machine and stretched 2.0 times longer than its original length in the horizontal direction by using a horizontal stretching machine at 100˚C. Thereafter the membrane material was subjected to heat setting/relaxation treatment to obtain a separator for the battery. Table 1 shows the properties of the obtained separator for the battery.

(Example 1-2)

The materials composing the layer A were similar to those of the example 1-1. As the high-density polyethylene resin composing the layer B, high-density polyethylene ("Hi-ZEX3300F" produced by Prime Polymer Corporation, density: 0.950g/cm$^3$, MFR: 1.1g/10 minutes) was used. By using different extruders, the above-described two kinds of the materials were extruded from the mouthpiece for the two-kind three-layer structure in which the outer layers were composed of the layer A and the inner layer was composed of the layer B. Thereafter the materials were cooled to solidify them by using the casting roll at 125˚C to prepare a membrane material.

The membrane material was stretched 4.5 times longer than its original length in the vertical direction by using the vertical stretching machine and stretched 2.2 times longer than its original length in the horizontal direction by using the horizontal stretching machine at 100˚C. Thereafter the membrane material was subjected to heat setting/relaxation treatment to obtain a separator for the battery. Table 1 shows the properties of the obtained separator for the battery.

(Example 1-3)

A membrane material was prepared in a manner similar to that of the example 1-1. The membrane material was stretched 4.1 times longer than its original length in the vertical direction by using the vertical stretching machine and thereafter stretched 1.8 times longer than its original length in the horizontal direction by using the horizontal stretching machine at 100˚C. Thereafter the membrane material was subjected to heat setting/relaxation treatment to obtain a separator for the battery. Table 1 shows the properties of the obtained separator for the battery.

(Reference Example 1-1)

100 parts by mass of high-density polyethylene ("7000FP" produced by Sumitomo Mitsui Polyolefin Co., Ltd., density: 0.954g/cm$^3$, melt flow rate: 0.04g/10 minute, Tm 134˚C), 160 parts by mass of barium sulfate ("B-55" produced by Sakai Chemical Co., Ltd.) and 7 parts by mass of Hy-Castor wax ("HCOP" produced by Hokoku Oil Mill Co., Ltd.) were dry-blended. After the above-described three kinds of the components were supplied to the twin screw extruder (diameter: 40mmø, L/D :32) produced by Toshiba Machine Co., Ltd. and fused and mixed with each other, a strand was cooled and solidified in the water bath and cut by the pelletizer to prepare a pellet. This material was molded with an inflation die of 100mmø to form a membrane material. The membrane material was stretched 4.9 times longer than its original length in the vertical direction and stretched 3.3 times longer than its original length in the horizontal direction to obtain a separator for the battery as shown in table 1.

(Comparison Example 1-1)

The polypropylene resin ("Prime polypro F300SV" produced by Prime Polymer Corporation, density: 0.90g/cm$^3$, MFR: 3.0g/10 minutes, Tm: 167˚C) and a polyethylene resin (2208J produced by Prime Polymer Corporation, density: 0.964g/cm$^3$, MFR: 5.2g/10 minutes, Tm: 135˚C) were used as the layer A and the layer B respectively. After the above-described materials were co-extruded at a draft ratio of 180 by using multi-layer molding die to obtain a membrane material having the two-kind three-layer structure in which the outer layers were composed of the layer A and the inner layer was composed of the layer B, the membrane material was annealed by an oven at 115˚C. Thereafter the membrane material was stretched 1.3 times longer than its original length at 25˚C. After the membrane material was stretched at 120˚C to make the length thereof 3.5 times longer than the length thereof stretched at 25˚C, it was heat-treated in such a way that it was relaxed at 10% to obtain a separator for the battery. Table 1 shows the properties of the obtained separator for the battery.

(Reference Example 1-2)

A thick membrane material was prepared in a manner similar to that of the example 1-3. The membrane material was stretched 4.1 times longer than its original length in the vertical direction by using the vertical stretching machine and thereafter stretched 2.0 times longer than its original length in the horizontal direction by using the horizontal stretching machine at 100˚C. Thereafter the membrane material was subjected to heat setting/relaxation treatment to obtain a separator for the battery. Table 1 shows the properties of the obtained separator for the battery.

Table 1

| | Layer construction | Ratio among layers | Thickness | Gurley value | Puncture strength | Ra | dBP | DSC | XRD |
|---|---|---|---|---|---|---|---|---|---|
| | | | μm | Second/100ml | N | μm | μm | | |
| Example1-1 | layer A/layer B/layer A | 3/1/3 | 22 | 370 | 2.2 | 0.46 | 0.03 | ○ | ○ |
| Example1-2 | layer A/layer B/layer A | 3/1/3 | 24 | 330 | 2.3 | 0.62 | 0.04 | ○ | ○ |
| Example1-3 | layer A/layer B/layer A | 3/1/3 | 31 | 600 | 3.1 | 0.88 | 0.02 | ○ | ○ |
| Reference example1-1 | Single layer (PE + filler) | - | 25 | 170 | 1.3 | 1.2 | 0.18 | × | × |
| Comparison example1-1 | layer A/layer B/layer A | 1/1/1 | 25 | 640 | 2.3 | 0.14 | 0.02 | × | × |
| Reference example1-2 | layer A/layer B/layer A | 3/1/3 | 58 | 1090 | 5.4 | 1.0 | 0.02 | ○ | ○ |

<Preparation of Non-aqueous Electrolyte>

In a dry argon atmosphere, purified ethylene carbonate and diethyl carbonate were mixed with each other at a volume ratio of 3:7 to prepare a mixed solvent. $LiPF_6$ sufficiently dried was dissolved at a rate of 1 mol/$dm^3$ in the solvent to prepare a non-aqueous electrolyte.

<Production of Positive Electrode>

As the positive active substance, $LiCoO_2$ was used. Six parts by mass of carbon black and 9 parts by mass of vinylidene polyfluoride ("KF-1000" produced by Kureha Chemical Industry, Co., Ltd.) were added to 85 parts by mass of the $LiCoO_2$ and were mixed therewith. The vinylidene polyfluoride and the positive active substance were dispersed with N-methyl-2-pyrrolidone to slurry it. This was uniformly applied to both surfaces of an aluminum foil, having a thickness of 20μm, which was a positive electrode current collector. After the solvent was dried, it was so pressed by a press machine that the density of the positive active substance layer was 3.0g/$cm^3$.

<Production of Negative Electrode>

As the negative active substance, natural graphite powder was used. Six parts by mass of vinylidene polyfluoride and 94 parts by mass of the natural graphite powder were mixed with each other. The above-described components were dispersed by the N-methyl-2-pyrrolidone to slurry the mixture. The slurry was uniformly applied to both surfaces of a copper foil, having a thickness of 18μm, which was a negative electrode current collector. After the solvent was dried, it was so pressed by a press machine that the density of the negative active substance layer was 1.5g/$cm^3$.

<Assembling of Battery>

After the negative plate and the positive plate prepared as described above were wound together with each separator for the battery by layering them one upon another, the outermost periphery of the assembly was fixed with a tape to form a spiral electrode material. The electrode material was inserted into a cylindrically formed battery case made of stainless steel from an opening thereof. Thereafter the negative lead connected with the negative electrode of the electrode material was welded to the inner bottom portion of the battery case, and the positive lead connected with the positive electrode of the electrode material was welded to the bottom portion of a current cutoff apparatus which operates when a gas pressure inside the battery becomes higher than a predetermined value. An explosion valve and the current cutoff apparatus were mounted on the bottom portion of an opening-sealing plate. After 5ml of the electrolyte was injected into the battery case, the opening of the battery case was sealed with the opening-sealing plate and an insulation gasket made of polypropylene. In this manner, a non-aqueous lithium secondary battery was produced.

<Evaluation of Battery>

(1) Initial charge and discharge

After a 4.2V constant current and constant voltage charge (CCCV charge) (0.05C cut) was carried out, i.e., after batteries were charged and discharged in three cycles at a charge cut-off voltage of 4.2V and a discharge cut-off voltage of 3V by flowing a constant electric current equivalent to 0.2C (current value of discharging rating capacity by one-hour rate discharge capacity is set as 1C, and so forth) therethrough at 25˚C to stabilize the voltage thereof, the batteries were charged in a fourth cycle up to the charge cut-off voltage of 4.2V by flowing electric current equivalent to 0.5C therethrough until a charged current value became a value equivalent to 0.05C. Thereafter 3V discharge was performed by flowing electric current having a constant current value equivalent to 0.2C. The discharged capacity at this time was set as the initial capacity. The initial discharge capacity of the battery produced in this manner was about 2000 mAh.

(2) Cycle test

In a cycle test, a charge and discharge cycle of charging batteries subjected to the above-described (1) initial charge and discharge up to the upper charge limit of 4.2V by carrying out a 0.5C constant electric current and constant voltage method and thereafter discharging the batteries up to the charge cut-off voltage of 3V by flowing the constant electric current of 0.5C therethrough was set as one cycle. This cycle was repeated 1000 times. The cycle test was conducted at 25˚C. After the cycle test finished, charge and discharge similar to the above-described (1) initial charge and discharge was performed. The ratio of the final discharge capacity obtained at that time to the initial capacity was set as the cycle maintenance rate (%) which is shown in table 2.

(3) High temperature storage test

After the battery subjected to the above-described (1) initial charge and discharge was charged up to the upper charge limit of 4.2V by flowing the constant electric current equivalent to 0.5C therethrough, the batteries were charged (full charge) at a constant voltage for 2.5 hours. The batteries were stored for 30 days in 60-degree environment. After the batteries were discharged up to 3V at a current value equivalent to 0.2C at 25˚C, 4.2V-CCCV charge similar to that performed in the initial charge and discharge was performed. Thereafter 3V discharge was performed by flowing a constant electric current equivalent to 0.2C through the batteries. The discharge capacity obtained at that time was set as the capacity after storage. The ratio of the capacity after storage to the initial capacity was set as the capacity recovery rate (%).

By using the batteries, evaluation of the BD property and the performance of each battery were made.

Table 2

| | BD property | Cycle maintenance rate | Capacity recovery rate |
|---|---|---|---|
| | | % | % |
| Example 1-1 | ○ | 74 | 87 |
| Example 1-2 | ○ | 85 | 89 |
| Example 1-3 | ○ | 80 | 76 |
| Reference example 1-1 | × | short-circuited midway | Unmeasurable |
| Comparison example 1-1 | ○ | 10 | 68 |
| Reference example 1-2 | ○ | 42 | 72 |

As apparent from table 2, the separators of the examples for the battery constructed in the range specified in the present invention are superior to the separators of the comparison examples for battery constructed out of the range specified in the battery properties thereof such as the cycle property and high temperature storage property.

Examples 2-1 through 2-3 and comparison example 2-1 through 2-3 are described below.
The properties of (1) through (5) and (7) through (9) were measured in methods similar to those of the examples 1-1 and the like except $Ra_p/Ra_v$ described below.

(1) Thickness
(2) Ratio among layers
(3) Gurley value
(4) Puncture strength
(5) Arithmetic average roughness Ra
(7) BD property
(8) Measurement of differential scanning calorimeter (DSC)
(9) Measurement of wide-angle X-ray diffraction (XRD)
(6) $Ra_p/Ra_v$

Samples were prepared in a method similar to that used in the measurement of the arithmetic average roughness Ra. In measuring the arithmetic average roughness Ra by using the laser microscope (VK-8500 produced by KEYENCE CORPORATION), the samples were scanned linearly with laser at arbitrary five positions thereof displayed on a screen in the longitudinal and width direction thereof. The average value of the arithmetic average roughness Ra measured five times was set as $Ra_p$ and $Ra_v$ in the longitudinal and width direction of the separator for the battery respectively, and the ratio of $Ra_p/Ra_v$ was determined.

(Example 2-1)

The polypropylene resin ("300SV" produced by Prime Polymer Corporation, density: 0.90g/cm³, MFR: 3.0g/10 minutes, Tm: 167˚C) and the N,N'-dicyclohexyl-2,6-naphthalene dicarboxylic amide serving as the β crystal nucleating agent were prepared as the layer A. 0.2 parts by mass of the β crystal nucleating agent was blended with 100 parts by mass of the polypropylene resin. After the components were supplied to the twin screw extruder (diameter: 40mmø, L/D : 32) produced by Toshiba Machine Co., Ltd and fused and mixed with each other at a set temperature of 300˚C, a strand was cooled and solidified in a water bath and cut by the pelletizer to prepare a pellet of the polypropylene resin. The β activity of the polypropylene resin composition was 80%.

As the mixed resin composition composing the layer B, 0.04 parts by mass of the glycerol monoester and 10 parts by mass of the microcrystalline wax ("Hi-Mic 1080" produced by Nippon Seiro Co., Ltd.) were added to 100 parts by mass of the high-density polyethylene ("Novatec HD HF560" produced by Japan Polyethylene Corporation, density: 0.963g/cm³, MFR: 7.0g/10 minutes). The above-described three components were fused and kneaded at 220˚C by using the same-type same-direction twin screw extruder to obtain a resin composition.

By using different extruders, the above-described two kinds of the materials were extruded from multi-layer molding die through a two-kind three-layer feed block. Thereafter the materials were cooled to solidify them by using the casting roll at 127˚C to prepare a multilayer membrane material having the two-kind three-layer structure in which the outer layers consisted of the layer A and the inner layer consisted of the layer B.
The multilayer membrane material was stretched 4.4 times longer than its original length in the vertical direction by using the vertical stretching machine and stretched 2.0 times longer than its original length in the horizontal direction by using the horizontal stretching machine at 105˚C. Thereafter the membrane material was subjected to heat setting/relaxation treatment to obtain a separator for the battery. Table 3 shows the properties of the obtained separator for the battery.

(Example 2-2)

Except that as the high-density polyethylene resin composing the layer B, the high-density polyethylene ("Hi-ZEX3300F" produced by Prime Polymer Corporation, density: 0.950g/cm³, MFR: 1.1g/10 minutes) was used, a multilayer membrane material was prepared in condition similar to those of the example 2-1.
The membrane material was stretched 4.8 times longer than its original length in the vertical direction by using the vertical stretching machine and stretched 2.1 times longer than its original length in the horizontal direction by using the horizontal stretching machine at 105˚C. Thereafter the membrane material was subjected to heat setting/relaxation treatment to obtain a separator for the battery. Table 3 shows the properties of the obtained separator for the battery.

(Example 2-3)

A multilayer membrane material was prepared in a manner similar to that of the example 2-1. The multilayer membrane material was stretched 3.9 times longer than its original length in the vertical direction by using the vertical stretching machine and thereafter stretched 1.8 times longer than its original length in the horizontal direction by using the horizontal stretching machine at 105˚C. Thereafter the membrane material was subjected to heat setting/relaxation treatment to obtain a separator for the battery. Table 3 shows the properties of the obtained separator for the battery.

(Comparison Example 2-1)

The polypropylene resin ("Prime polypro F300SV" produced by Prime Polymer Corporation, density: $0.90g/cm^3$, MFR: 3g/10 minutes, Tm: 167˚C) and the polyethylene resin (2208J produced by Prime Polymer Corporation, density: $0.964g/cm^3$, MFR: 5.2g/10 minutes, Tm: 135˚C) were prepared as the layer A and the layer B respectively. After the above-described materials were co-extruded at a draft ratio of 200 by using multi-layer molding die to obtain a membrane material having the two-kind three-layer structure in which the outer layers consisted of the layer A and the inner layer consisted of the layer B, the materials were annealed at 115˚C.
After the membrane material was annealed, it was stretched 1.5 times longer than its original length at 25˚C. After the membrane material was stretched at 120˚C so that the length thereof stretched at 25˚C became 3.2 times longer than its original length, the membrane material was heat-treated in such a way that it was relaxed at 10% to obtain a separator for the battery. Table 3 shows the properties of the obtained separator for the battery.

Table 3

| | Layer construction | Ratio among layers | Thickness | Gurley value | Puncture strength | Ra | Ra1/Ra2 upper surface, lower surface | DSC | XRD |
|---|---|---|---|---|---|---|---|---|---|
| | | | μm | Second/100ml | N | μm | | | |
| Example2-1 | layer A/layer B/layer A | 3/1/3 | 24 | 340 | 2.1 | 0.45 | 0.91,1.12 | ◯ | ◯ |
| Example2-2 | layer A/layer B/layer A | 3/1/3 | 23 | 290 | 2.1 | 0.60 | 0.92,1.10 | ◯ | ◯ |
| Example2-3 | layer A/layer B/layer A | 3/1/3 | 32 | 580 | 3.1 | 0.90 | 0.83,1.18 | ◯ | ◯ |
| Comparison example 2-1 | layer A/layer B/layer A | 1/1/1 | 25 | 580 | 2.2 | 0.15 | 0.78,1.19 | ✕ | ✕ |

The preparation of the non-aqueous electrolyte, the preparation of the positive electrode, the preparation of the negative electrode, the assembling of the battery, the evaluation of the battery, the cycle test, and the high-temperature storage test were conducted similarly to the example 1-1 and the like. Table 4 shows the results of evaluation of the cycle test, the high temperature storage test, and the BD property.

Table 4

| | BD property | Cycle maintenance rate | Capacity recovery rate |
|---|---|---|---|
| | | % | % |
| Example2-1 | ◯ | 72 | 86 |
| Example2-2 | ◯ | 84 | 88 |
| Example2-3 | ◯ | 82 | 78 |
| Comparison example2-1 | ◯ | 12 | 70 |

As apparent from table 4, the separators of the examples for the battery constructed in the range specified in the present invention are superior to the separators of the comparison examples for the battery constructed out of the specified range in the battery properties thereof such as the cycle property and high temperature storage property.

Examples 3-1 through 3-4 and a comparison example 3-1 are shown below.

The properties of (1) thickness, (2) ratio among layers, (3) Gurley value, (4) puncture strength, (5) bubble point pore diameter, (6) arithmetic average roughness Ra, (8) BF property, (9) differential scanning calorimeter (DSC), (10) wide-angle X-ray diffraction (XRD) were measured in methods similar to those of the examples 1-1 and the like except (7) the mean peak spacing (Sm) described below.

(7) The mean peak spacing (Sm)

The mean peak spacing (Sm) was measured in accordance with JIS B0601-1994.

Samples were prepared in a method similar to that used in the measurement of the arithmetic average roughness Ra. In measuring the surface roughness Ra by using the laser microscope (VK-8500 produced by KEYENCE CORPORATION), the upper and lower surfaces of the samples were scanned linearly five times each in the longitudinal and width directions thereof with laser at arbitrary five positions thereof displayed on a screen. The average value of measured 10 mean peak spacing (Sm) obtained by scanning the surfaces of each sample five times each in the longitudinal and width directions thereof was set as the mean peak spacing (Sm) of the measured surfaces of each sample.

(Example 3-1)

The polypropylene resin ("300SV" produced by Prime Polymer Corporation, density: 0.90g/cm$^3$, MFR: 3g/10 minutes, Tm: 167˚C) and the N,N'-dicyclohexyl-2,6-naphthalene dicarboxylic amide serving as the β crystal nucleating agent were prepared as the layer A. 0.2 parts by mass of then β crystal nucleating agent was blended with 100 parts by mass of the polypropylene resin. After the components were supplied to the twin screw extruder (diameter: 40mm∅, L/D : 32) produced by Toshiba Machine Co., Ltd and fused and mixed with each other at a set temperature of 300˚C, a strand was cooled and solidified in a water bath and cut by the pelletizer to prepare a pellet of the polypropylene resin. The β activity of the polypropylene resin composition was 80%.

As the mixed resin composition composing the layer B, 0.04 parts by mass of the glycerol monoester and 10 parts by mass of the microcrystalline wax ("Hi-Mic 1080" produced by Nippon Seiro Co., Ltd.) were added to 100 parts by mass of the high-density polyethylene (Novatec HD HF560 produced by Japan Polyethylene Corporation, density: 0.963g/cm$^3$, MFR: 7.0g/10 minutes). The above-described three components were fused and kneaded at 220˚C by using the same-type same-direction twin screw extruder to obtain a pelletized resin composition.

By using different extruders, the above-described two kinds of the materials were extruded from die for the two-kind three-layer structure in which the outer layers consisted of the layer A and the inner layer consisted of the layer B. Thereafter the materials were cooled to solidify them by using the casting roll at 125˚C to prepare a multilayer membrane material.

The membrane material was stretched 4.4 times longer than its original length in the vertical direction by using a vertical stretching machine and stretched 2.1 times longer than its original length in the horizontal direction by using a horizontal stretching machine at 110˚C. Thereafter the membrane material was subjected to heat setting/relaxation treatment to obtain a separator for the battery. Table 5 shows the properties of the obtained separator for the battery.

(Example 3-2)

Except that as the high-density polyethylene resin composing the layer B, the high-density polyethylene ("Hi-ZEX3300F" produced by Prime Polymer Corporation, density: 0.950g/cm$^3$, MFR: 1.1g/10 minutes) was used, a multilayer membrane material was prepared in conditions similar to those of the example 1-1.

By using different extruders, the above-described two kinds of the materials were extruded from die for the two-kind three-layer structure in which the outer layers consisted of the layer A and the inner layer consisted of the layer B. Thereafter the materials were cooled to solidify them by using the casting roll at 125˚C to prepare a multilayer membrane material.

The membrane material was stretched 4.8 times longer than its original length in the vertical direction by using a vertical stretching machine and stretched 2.2 times longer than its original length in the horizontal direction by using a horizontal stretching machine at 110˚C. Thereafter the membrane material was subjected to heat setting/relaxation treatment to obtain a separator for the battery. Table 5 shows the properties of the obtained separator for the battery.

(Example 3-3)

A multilayer membrane material was prepared in a manner similar to that of the example 3-1. The multilayer membrane material was stretched 4.0 times longer than its original length in the vertical direction by using the vertical stretching machine and thereafter stretched 1.8 times longer than its original length in the horizontal direction by using the horizontal stretching machine at 110˚C. Thereafter the membrane material was subjected to heat setting/relaxation treatment to obtain a separator for the battery. Table 5 shows the properties of the obtained separator for the battery.

(Example 3-4)

A multilayer membrane material was prepared in a manner similar to that of the example 3-2. The multilayer membrane material was stretched 5.0 times longer than its original length in the vertical direction by using the vertical stretching machine and thereafter stretched 3.2 times longer than its original length in the horizontal direction by using the horizontal stretching machine at 110˚C. Thereafter the membrane material was subjected to heat setting/relaxation treatment to obtain a separator for the battery. Table 5 shows the properties of the obtained separator for the battery.

(Comparison Example 3-1)

The polypropylene resin ("Prime polypro F300SV" produced by Prime Polymer Corporation, density: 0.90g/cm$^3$, MFR: 3.0g/10 minutes, Tm: 167˚C) and the polyethylene resin (2208J produced by Prime Polymer Corporation, density: 0.964g/cm$^3$, MFR: 5.2g/10 minutes, Tm: 135˚C) were used as the layer A and the layer B respectively. After the above-described materials were co-extruded at a draft ratio of 160 by using multi-layer molding die to obtain a membrane material having the two-kind three-layer structure in which the outer layers consisted of the layer A and the inner layer consisted of the layer B, the materials were annealed at 115˚C.
Thereafter the obtained membrane material was stretched 1.5 times longer than its original length at 25˚C. After the membrane material was stretched at 120˚C so that the length thereof stretched at 25˚C became 3.3 times longer than its original length, the membrane material was heat-treated in such a way that it was relaxed at 12% to obtain a separator for the battery. Table 5 shows the properties of the obtained separator for the battery.

Table 5

| | Layer construction | Ratio among layers | Thickness | Gurley value | Puncture strength | Ra | Sm | dBP | DSC | XRD |
|---|---|---|---|---|---|---|---|---|---|---|
| | | | μm | Second/100ml | N | μm | μm | μm | | |
| Example3-1 | layer A/layer B/layer A | 3/1/3 | 23 | 330 | 2.0 | 0.44 | 1.6 | 0.04 | ○ | ○ |
| Example3-2 | layer A/layer B/layer A | 3/1/3 | 26 | 300 | 2.4 | 0.58 | 1.6 | 0.04 | ○ | ○ |
| Example3-3 | layer A/layer B/layer A | 3/1/3 | 29 | 540 | 2.9 | 0.89 | 1.5 | 0.02 | ○ | ○ |
| Example3-4 | layer A/layer B/layer A | 3/1/3 | 25 | 200 | 1.7 | 0.50 | 1.6 | 0.07 | ○ | ○ |
| Comparison example3-1 | layer A/layer B/layer A | 1/1/1 | 25 | 660 | 2.3 | 0.16 | 1.2 | 0.02 | × | × |

The preparation of the non-aqueous electrolyte, the preparation of the positive electrode, the preparation of the negative electrode, and the assembling of the battery were conducted similarly to the example 1-1 and the like. (1) the initial charge and discharge, (2) the cycle test, and (3) the high-temperature storage test were also evaluated similarly to the example 1-1 and the like.

Table 6 shows the results of the evaluation of the BD property and the battery performance of the separators for battery.

Table 6

| | BD property | Cycle maintenance rate | Capacity recovery rate |
|---|---|---|---|
| | | % | % |
| Example3-1 | ○ | 71 | 85 |
| Example3-2 | ○ | 82 | 88 |
| Example3-3 | ○ | 81 | 79 |
| Example3-4 | ○ | 62 | 77 |
| Comparison example3-1 | ○ | 14 | 70 |

As apparent from table 6, the separators of the examples 3-1 through 3-4 for battery constructed in the range specified in the present invention are superior to the separators of the comparison example 3-1 for battery constructed out of the specified range in the battery properties thereof such as the cycle property and high temperature storage property.

Examples 4-1 through 4-5 and a comparison examples 4-1 through 4-4 are shown below.

The properties of (1) thickness, (2) ratio among layers, (3) Gurley value, (5) puncture strength, (8) BD property, (9) differential scanning calorimeter (DSC), and (10) wide-angle X-ray diffraction (XRD) were measured in methods similar to those of the examples 1-1 and the like.

(4) Porosity

The porosity is a numerical value showing the ratio of the volume of spaces in the separator for the battery to the entire volume thereof. The porosity is computed by measuring a substantial mass W1 of the separator for the battery and computing a mass W0 when the porosity is 0% from the density and thickness of a resin composition to obtain the difference between the mass W0 and the substantial mass W1.

$$\text{Porosity Pv (\%)} = (W0 - W1)/W0 \times 100$$

(6) 10-point average roughness Rz

The 10-point average roughness Rz was measured in accordance with JIS B0601-1994.

A separator for the battery was cut out in a length of 10mm (width) × 50mm (length). The obtained separator for the battery was bonded to a double-stick tape (double-stick tape "No. 501F" produced by NITTO DENKO Corporation, 5mm (width) × 20m (length)) stretched in parallel with a glass plate (micro-slide glass S1225 produced by MATSUNAMI GLASS IND. LTD., 76mm × 26mm) by spacing the double-stick tape at not less than 15mm from the glass plate. (the separator for the battery was fixed with the central portion thereof without direct contact with the glass plate owing to the presence of the double-stick tape).

The surface roughness of the sample placed in this state was measured with the laser microscope (VK-8500 produced by KEYENCE CORPORATION). At that time, the range in which the surface roughness of the sample was measured was 110pm × 150μm. The surface roughness was measured five times at different positions. The average value of calculated values was set as the 10-point average roughness Rz of the separator.

(Example 4-1)

The polypropylene resin ("300SV" produced by Prime Polymer Corporation, density: 0.90g/cm$^3$, MFR: 3g/10 minutes, Tm: 167˚C) and the N,N'-dicyclohexyl-2,6-naphthalene dicarboxylic amide serving as the β crystal nucleating agent were prepared as the layer A. 0.2 parts by mass of the β crystal nucleating agent was blended with 100 parts by mass of the polypropylene resin. After the components were supplied to the twin screw extruder (diameter: 40mm∅, L/D : 32) produced by Toshiba Machine Co., Ltd and fused and mixed with each other at a set temperature of 300°C, a strand was cooled and solidified in a water bath and cut by the pelletizer to prepare a pellet of the polypropylene resin. The β activity of the polypropylene resin composition was 80%.

As the mixed resin composition composing the layer B, 0.04 parts by mass of the glycerol monoester and 10 parts by mass of the microcrystalline wax ("Hi-Mic 1080" produced by Nippon Seiro Co., Ltd.) were added to 100 parts by mass of the high-density polyethylene (Novatec HD HF560 produced by Japan Polyethylene Corporation, density: 0.963g/cm$^3$, MFR: 7.0g/10 minutes). The above-described three kinds of the components were fused and kneaded at 220°C by using the same-type same-direction twin screw extruder to obtain a pelletized resin composition.

The above-described two kinds of the materials were extruded by using different extruders from multi-layer molding die through a two-kind three-layer feed block. Thereafter the materials were cooled to solidify them by using the casting roll at 126°C to prepare a membrane material having the two-kind three-layer structure in which the outer layers consisted of the layer A and the inner layer consisted of the layer B.

The membrane material was stretched 4.5 times longer than its original length in the vertical direction by using the vertical stretching machine and stretched 2.0 times longer than its original length in the horizontal direction by using the horizontal stretching machine at 100°C. Thereafter the membrane material was subjected to heat setting/relaxation treatment to obtain a separator for the battery. Table 7 shows the properties of the obtained separator for the battery.

(Example 4-2)

Except that as the high-density polyethylene resin composing the layer B, the high-density polyethylene ("Hi-ZEX3300F" produced by Prime Polymer Corporation, density: 0.950g/cm$^3$, MFR: 1.1g/10 minutes) was used, a multilayer membrane material was prepared in conditions similar to those of the example 4-1.

The membrane material was stretched 4.7 times longer than its original length in the vertical direction by using the vertical stretching machine and stretched 2.1 times longer than its original length in the horizontal direction by using the horizontal stretching machine at 100°C. Thereafter the membrane material was subjected to heat setting/relaxation treatment to obtain a separator for the battery. Table 7 shows the properties of the obtained separator for the battery.

(Example 4-3)

A membrane material was prepared in a manner similar to that of the example 4-1. The membrane material was stretched 4.0 times longer than its original length in the vertical direction by using the vertical stretching machine and thereafter stretched 1.8 times longer than its original length in the horizontal direction by using the horizontal stretching machine at 100°C. Thereafter the membrane material was subjected to heat setting/relaxation treatment to obtain a separator for the battery. Table 7 shows the properties of the obtained separator for the battery.

(Example 4-4)

100 parts by mass of HMS polypropylene ("Inspire 114" produced by Dow Chemical Company, density: 0.90g/cm$^3$, MFR: 0.5g/10 minutes, Tm 166°C), 140 parts by mass of the barium sulfate ("B-55" produced by Sakai Chemical Co., Ltd.) and seven parts by mass of the Hy-Castor wax ("HCOP" produced by Hokoku Oil Mill Co., Ltd.) were dry-blended. After the above-described three components were supplied to the twin screw extruder (diameter: 40mm∅, L/D : 32) produced by Toshiba Machine Co., Ltd. and fused and mixed with each other, a strand was cooled and solidified in a water bath and cut by the pelletizer to prepare a pellet.

The pellet was molded with an inflation die of 100mm∅ to form a membrane material. The membrane material was stretched 3.0 times longer than its original length in the vertical direction and stretched 2.3 times longer than its original length in the horizontal direction to obtain a separator for the battery as shown in table 7.

(Example 4-5)

100 parts by mass of the HMS polypropylene ("Inspire 114" produced by Dow Chemical Company, density: 0.90g/cm$^3$, MFR: 0.5g/10 minutes, Tm 166°C), 120 parts by mass of the barium sulfate ("B-55" produced by Sakai Chemical Co., Ltd.) and seven parts by mass of the Hy-Castor wax ("HCOP" produced by Hokoku Oil Mill Co., Ltd.) were dry-blended. After the above-described three kinds of the components were supplied to the twin screw extruder (diameter: 40mm∅, L/D : 32) produced by Toshiba Machine Co., Ltd. and fused and mixed with each other, a strand was cooled and solidified in a water bath and cut by the pelletizer to prepare a pellet.

The pellet was molded with an inflation die of 100mm∅ to form a membrane material. The membrane material was stretched 3.1 times longer than its original length in the vertical direction and stretched 2.5 times longer than its original length in the horizontal direction to obtain a separator for the battery as shown in table 7.

(Comparison Example 4-1)

100 parts by mass of the high-density polyethylene ("7000FP" produced by Sumitomo Mitsui Polyolefin Co., Ltd., density: 0.954g/cm$^3$, melt flow rate: 0.04g/10 minute, Tm 134˚C), 160 parts by mass of the barium sulfate ("B-55" produced by Sakai Chemical Co., Ltd.) and seven parts by mass of the Hy-Castor wax ("HCOP" produced by Hokoku Oil Mill Co., Ltd.) were dry-blended. After the above-described three kinds of the components were supplied to the twin screw extruder (diameter: 40mm∅, L/D : 32) produced by Toshiba Machine Co., Ltd. and fused and mixed with each other, a strand was cooled and solidified in a water bath and cut by the pelletizer to prepare a pellet. The pellet was molded with an inflation die of 100mm∅ to form a membrane material. The membrane material was stretched 5.0 times longer than its original length in the vertical direction and stretched 3.3 times longer than its original length in the horizontal direction to obtain a separator for the battery as shown in table 7.

(Comparison Example 4-2)

100 parts by mass of the HMS polypropylene ("Inspire 114" produced by Dow Chemical Company, density: 0.90g/cm$^3$, melt flow rate: 0.5g/10 minutes, Tm 166˚C), 160 parts by mass of the barium sulfate ("B-55" produced by Sakai Chemical Co., Ltd.) and seven parts by mass of the Hy-Castor wax ("HCOP" produced by Hokoku Oil Mill Co., Ltd.) were dry-blended. After the above-described three kinds of the components were supplied to the twin screw extruder (diameter: 40mm∅, L/D : 32) produced by Toshiba Machine Co., Ltd. and fused and mixed with each other, a strand was cooled and solidified in a water bath and cut by the pelletizer to prepare a pellet. The pellet was molded with an inflation die of 100mm∅ to form a membrane material. The membrane material was stretched 4.5 times longer than its original length in the vertical direction and stretched 2.9 times longer than its original length in the horizontal direction to obtain a separator for the battery as shown in table 7.

(Comparison Example 4-3)

The polypropylene resin ("Prime polypro F300SV" produced by Prime Polymer Corporation, density: 0.90g/cm$^3$, MFR: 3g/10 minutes, Tm: 167˚C) and the polyethylene resin (2208J produced by Prime Polymer Corporation, density: 0.964g/cm$^3$, MFR: 5.2g/10 minutes, Tm: 135˚C) were prepared as the layer A and the layer B respectively. After the above-described materials were co-extruded at a draft ratio of 200 by using multi-layer molding die to obtain a membrane material having the two-kind three-layer structure in which the outer layers consisted of the layer A and the inner layer consisted of the layer B, the materials were annealed at 115˚C.
Thereafter the membrane material was stretched 1.4 times longer than its original length at 25˚C. After the membrane material was stretched at 120˚C so that the length thereof stretched at 25˚C became 3.2 times longer than its original length, the membrane material was heat-treated in such a way that it was relaxed at 10% to obtain a separator for the battery. Table 7 shows the properties of the obtained separator for the battery.

(Comparison Example 4-4)

A membrane material having a different thickness was prepared in a manner similar to that of the example 3. The membrane material was stretched 4.2 times longer than its original length in the vertical direction by using the vertical stretching machine and thereafter stretched 1.9 times longer than its original length in the horizontal direction by using the horizontal stretching machine at 100˚C. Thereafter the membrane material was subjected to heat setting/ relaxation treatment to obtain a separator for the battery having a thickness of 60μm. Table 7 shows the properties of the obtained separator for the battery.

Table 7

| | Layer construction | Ratio among layers | Thickness | Gurley value | Puncture strength | Rz | DSC | XRD |
|---|---|---|---|---|---|---|---|---|
| | | | μm | Second/ 100ml | N | μm | | |
| Example4-1 | layer A/layer B/layer A | 3/1/3 | 23 | 350 | 2.0 | 5 | ○ | ○ |

(continued)

|  | Layer construction | Ratio among layers | Thickness | Gurley value | Puncture strength | Rz | DSC | XRD |
|---|---|---|---|---|---|---|---|---|
|  |  |  | μm | Second/ 100ml | N | μm |  |  |
| Example4-2 | layer A/layer B/layer A | 3/1/3 | 25 | 300 | 2.2 | 8 | ○ | ○ |
| Example4-3 | layer A/layer B/layer A | 3/1/3 | 30 | 560 | 3.0 | 9 | ○ | ○ |
| Example4-4 | Single layer (PE + filler) | - | 30 | 310 | 1.6 | 11 | × | × |
| Example4-5 | Single layer (PE + filler) | - | 31 | 330 | 1.8 | 11 | × | × |
| Comparison example4-1 | single layer (PE + filler) | - | 23 | 170 | 1.1 | 10 | × | × |
| Comparison example4-2 | Single layer (PE + filler) | - | 26 | 150 | 1.3 | 11 | × | × |
| Comparison example4-3 | layer A/layer B/layer A | 1/1/1 | 25 | 600 | 2.2 | 3 | × | × |
| Comparison example4-4 | layer A/layer B/layer A | 3/1/3 | 60 | 1050 | 5.5 | 9 | ○ | ○ |

The preparation of the non-aqueous electrolyte, the preparation of the positive electrode, the preparation of the negative electrode, and the assembling of the battery were conducted similarly to the example 1-1 and the like. The evaluation of the battery, namely, (1) the initial charge and discharge, (2) the cycle test, and (3) the high-temperature storage test were also conducted similarly to the example 1-1 and the like.

By using the separator for the battery of the examples 4-1 through 4-5 and those of the comparison examples 4-1 through 4-4, evaluation of the SD property, the BD property, and the performance of each battery were made.

Table 8

|  | BD property | Cycle maintenance rate | Capacity recovery rate |
|---|---|---|---|
|  |  | % | % |
| Example4-1 | ○ | 75 | 88 |
| Example4-2 | ○ | 87 | 90 |
| Example4-3 | ○ | 85 | 83 |
| Example4-4 | ○ | 78 | 85 |
| Example4-5 | ○ | 82 | 83 |
| Comparison example4-1 | × | short-circuited midway | Unmeasurable |
| Comparison example4-2 | ○ | short-circuited midway | Unmeasurable |
| Comparison example4-3 | ○ | 15 | 74 |
| Comparison example4-4 | ○ | 47 | 77 |

As apparent from table 8, the separators of the examples 4-1 through 4-5 for the battery constructed in the range specified in the present invention are superior to the separators of the comparison example 4-1 through 4-4 for the battery constructed out of the range specified in all of or any of the BD property and each of the battery properties thereof.

Examples 5-1 through 5-4 are shown below.

(1) The thickness, (2) the ratio among layers, (5) the differential scanning calorimeter (DSC-7), and (6) the wide-angle X-ray diffraction measurement (XRD) were measured by carrying out the same method as that of the example 1-1 and the like.

(3) Arithmetic average roughness Ra, maximum height Ry, and 10-point average roughness Rz

The arithmetic average roughness Ra, the maximum height Ry, and the 10-point average roughness Rz were measured in accordance with JIS B0601-1994.

A separator for the battery was cut out in the length of 10mm (width) $\times$ 50mm (length). The obtained separator for the battery was bonded to the double-stick tape (double-stick tape "No. 501F, 5mm (width) $\times$ 20m (length) produced by NITTO DENKO Corporation) stretched in parallel with the glass plate (micro-slide glass S1225, 76mm $\times$ 26mm, produced by MATSUNAMI GLASS IND. LTD.) by spacing the double-stick tape at not less than 15mm from the glass plate. At this time, the separator for the battery is fixed without direct contact between the central portion thereof and the glass plate owing to the presence of the double-stick tape.

The arithmetic average roughness Ra, the maximum height Ry, and the 10-point average roughness Rz of the sample produced by carrying out the above-described method were measured with the laser microscope (VK-8500 produced by KEYENCE CORPORATION). The range in which the arithmetic average roughness Ra, the maximum height Ry, and the 10-point average roughness Rz of the sample were measured was 110$\mu$m $\times$ 150$\mu$m. The arithmetic average roughness Ra, the maximum height Ry, and the 10-point average roughness Rz were measured five times at different positions. The average value of each of the arithmetic average roughnesses Ra, maximum heights Ry, and 10-point average roughnesses Rz was calculated.

(4) Electric resistance

A sample was cut squarely in the dimension of 3.5cm $\times$ 3.5cm in an air atmosphere of 25˚C and put in a glass laboratory dish. A solution which contained 1M of lithium perchlorate (produced by Kishida Chemical Co, Ltd.) and the mixture of propylene carbonate : ethylmethyl carbonate = 1:1 (v/v) was put in the glass laboratory dish to such an extent that the sample was immersed in the solution to soak the solution into the sample. After the sample was taken out of the glass laboratory dish and extra electrolytic solution was wiped, the sample was placed at the center of a glass laboratory dish made of stainless steel. A weight, made of stainless steel, which had 30mm$\varnothing$ in the diameter of a bottom surface thereof and weighted 100g was slowly placed on the sample. Thereafter terminals were connected to the glass laboratory dish and the weight to measure the electric resistance by using a Hioki LCR HiTESTER (Model Number: 3522-50 produced by Hioki Co., Ltd.).

(Separator 1)

The polypropylene resin ("300SV" produced by Prime Polymer Corporation, density: 0.90g/cm$^3$, MFR: 3.0g/10 minutes, Tm: 167˚C) and the N,N'-dicyclohexyl-2,6-naphthalene dicarboxylic amide serving as the $\beta$ crystal nucleating agent were prepared as the layer A. 0.2 parts by mass of the $\beta$ crystal nucleating agent was blended with 100 parts by mass of the polypropylene resin. After the components were supplied to the twin screw extruder (diameter: 40mm$\varnothing$, L/D : 32) produced by Toshiba Machine Co., Ltd and fused and mixed with each other at the set temperature of 300˚C, a strand was cooled and solidified in the water bath and cut by the pelletizer to prepare a pellet of the polypropylene resin. The $\beta$ activity of the polypropylene resin composition was 80%.

As the mixed resin composition composing the layer B, 0.04 parts by mass of the glycerol monoester and 10 parts by mass of the microcrystalline wax ("Hi-Mic 1080" produced by Nippon Seiro Co., Ltd.) were added to 100 parts by mass of the high-density polyethylene ("Novatec HD HF560" produced by Japan Polyethylene Corporation, density: 0.963g/cm$^3$, MFR: 7.0g/10 minutes). The above-described three kinds of the components were fused and kneaded at 220˚C by using the same-type same-direction twin screw extruder to obtain a resin composition.

By using different extruders, the above-described two kinds of the materials were extruded from multi-layer molding die through the two-kind three-layer feed block. Thereafter the materials were cooled to solidify them by using the casting roll at 123˚C to prepare a multilayer membrane material having the two-kind three-layer structure in which the outer layers consisted of the layer A and the inner layer consisted of the layer B.

The multilayer membrane material was stretched 4.6 times longer than its original length in the vertical direction by using a vertical stretching machine and stretched 1.9 times longer than its original length in the horizontal direction by using a horizontal stretching machine at 100˚C. Thereafter the membrane material was subjected to heat setting/relaxation treatment to obtain a separator 1. Table 9 shows the properties of the obtained separator 1.

(Separator 2)

The polypropylene resin ("300SV" produced by Prime Polymer Corporation, density: 0.90g/cm$^3$, MFR: 3.0g/ 10 minutes, Tm: 167˚C) and the N,N'-dicyclohexyl-2,6-naphthalene dicarboxylic amide serving as the β crystal nucleating agent were prepared as the layer A. 0.2 parts by mass of the β crystal nucleating agent was blended with 100 parts by mass of the polypropylene resin. After the components were supplied to the twin screw extruder (diameter: 40mm∅, L/ D : 32) produced by Toshiba Machine Co., Ltd and fused and mixed with each other at the set temperature of 300˚C, a strand was cooled and solidified in the water bath and cut by the pelletizer to prepare a pellet of the polypropylene resin. The β activity of the polypropylene resin composition was 80%.

As the mixed resin composition composing the layer B, 0.04 parts by mass of the glycerol monoester and 10 parts by mass of the microcrystalline wax ("Hi-Mic 1080" produced by Nippon Seiro Co., Ltd.) were added to 100 parts by mass of the high-density polyethylene ("Novatec HD HF560" produced by Japan Polyethylene Corporation, density: 0.963g/cm$^3$, MFR: 7.0g/10 minutes). The above-described three kinds of the components were fused and kneaded at 220˚C by using the same-type same-direction twin screw extruder to obtain a resin composition.

By using different extruders, the above-described two kinds of the materials were extruded from multi-layer molding die through the two-kind three-layer feed block. Thereafter the materials were cooled to solidify them by using the casting roll at 124˚C to prepare a multilayer membrane material having the two-kind three-layer structure in which the outer layers consisted of the layer A and the inner layer consisted of the layer B.

The multilayer membrane material was stretched 4.6 times longer than its original length in the vertical direction by using the vertical stretching machine and stretched 1.9 times longer than its original length in the horizontal direction by using the horizontal stretching machine at 98˚C. Thereafter the membrane material was subjected to heat setting/relaxation treatment to obtain a separator 2. Table 9 shows the properties of the obtained separator 2.

(Separator 3)

The polypropylene resin ("Prime polypro F300SV" produced by Prime Polymer Corporation, density: 0.90g/cm$^3$, MFR: 3.0g/10 minutes, Tm: 167˚C) and the polyethylene resin (2208J produced by Prime Polymer Corporation, density: 0.964g/cm$^3$, MFR: 5.2g/10 minutes, Tm: 135˚C) were used as the layer and the layer B respectively. After the above-described materials were co-extruded at a draft ratio of 200 by using multi-layer molding die to obtain a multilayer membrane material having the two-kind three-layer structure in which the outer layers consisted of the layer A and the inner layer consisted of the layer B, the materials were annealed at 115˚C.

Thereafter the membrane material was stretched 1.5 times longer than its original length at 25˚C. After the membrane material was stretched at 120˚C so that the length thereof stretched at 25˚C became 3.2 times longer than its original length, the membrane material was heat-treated in such a way that it was relaxed at 10% to obtain a separator for the battery. Table 9 shows the properties of the obtained separator 3.

Table 9

| | Thickness | Ratio among layers | Arithmetic average roughness of surface Ra | Maximum height Ry | 10-point average roughness Rz | Electric resistance | DSC | XRD |
|---|---|---|---|---|---|---|---|---|
| | μm | - | μm | μm | μm | Ω | - | - |
| Separator1 | 22 | 3/1/3 | 0.53 | 15.6 | 11.3 | 0.97 | ○ | ○ |
| Separator2 | 20 | 3/1/3 | 0.36 | 13.7 | 8.2 | 0.98 | ○ | ○ |
| Separator3 | 20 | 1/1/1 | 0.12 | 4.4 | 4.0 | 0.87 | × | × |

<Preparation of Non-aqueous Electrolyte>

In a dry argon atmosphere, purified ethylene carbonate (EC), dimethyl carbonate (DMC), and ethyl methyl carbonate (EMC) were mixed with each other at a volume ratio of 3:3:4 to prepare a mixed solvent. LiPF$_6$ sufficiently dried was dissolved at a rate of 1 mol/dm$^3$ in the solvent to prepare a non-aqueous electrolyte.

<Production of Positive Electrode>

As the positive electrode, $LiMn_{0.33}Ni_{0.33}CO_{0.33}O2$ was used. Five parts by mass of carbon black and five parts by mass of vinylidene polyfluoride ("KF-1000" produced by Kureha Chemical Industry, Co., Ltd.) were added to 90 parts by mass of the positive active substance and were mixed therewith. The vinylidene polyfluoride and the positive active substance were dispersed by N-methyl-2-pyrrolidone to slurry the mixture. The slurry was uniformly applied to both surfaces of an aluminum foil, having a thickness of $15\mu m$, which was a positive electrode current collector. After the solvent was dried, it was so pressed by a press machine that the density of the positive active substance layer was $2.6g/cm^3$.

<Production of Negative Electrode>

As the negative active substance, natural graphite powder was used. Six parts by mass of the vinylidene polyfluoride were added to 94 parts by mass of the natural graphite powder and were mixed therewith. The vinylidene polyfluoride and the negative active substance were dispersed by the N-methyl-2-pyrrolidone to slurry the mixture. The slurry was uniformly applied to both surfaces of a copper foil, having a thickness of $10\mu m$, which was a negative electrode current collector. After the solvent was dried, it was so pressed by the press machine that the density of the negative active substance layer was $1.4g/cm^3$.

[Example 5-1]

The positive plate and the negative plate prepared as described above were layered one upon another in the order of "the positive plate, the separator 2, the separator 1, and the negative plate" by disposing the active substance surface of one positive plate and that of one negative plate in opposition to each other and interposing the separators between the positive and negative electrodes. At that time, the positive active substance surface and the negative active substance surface were so disposed as to face each other. An electricity collection tab was welded to a portion of each of the positive and negative electrodes where the slurry was not applied to form electrode bodies. The electrode bodies were sandwiched between a laminate sheet (total thickness: O.1mm) consisting of a polypropylene film, an aluminum foil having a thickness of 0.04mm, and a nylon film layered one upon another in this order with the polypropylene film disposed at the inner side thereof. Except a portion into which an electrolyte was injected, the region where the electrodes were not disposed was heat-sealed. Thereafter $200\mu L$ of a non-aqueous electrolyte was injected into the active substance layers to sufficiently penetrate the non-aqueous electrolyte into the electrodes. Thereafter the laminate sheet was sealed to prepare a laminate cell. In this manner, a non-aqueous lithium secondary battery of the example 1 was prepared. The rating capacity of the battery was 20 mAh.

[Example 5-2]

Except that a battery was produced by layering the positive plate and the negative plate prepared as described above one upon another in the order of "the positive plate, the separator 3, the separator 1, and the negative plate", a non-aqueous lithium secondary battery was produced in a manner similar to that of the example 5-1.

[Example 5-3]

Except that a battery was produced by layering the positive plate and the negative plate prepared as described above one upon another in the order of "the positive plate, the separator 1, the separator 2, and the negative plate", a non-aqueous lithium secondary battery was produced in a manner similar to that of the example 5-1.

[Example 5-4]

Except that a battery was produced by layering the positive plate and the negative plate prepared as described above one upon another in the order of "the positive plate, the separator 1, the separator 3, and the negative plate", a non-aqueous lithium secondary battery was produced in a manner similar to that of the example 5-1.

<Evaluation of Battery>

(1) Measurement of capacity

Five cycles of initial charge and discharge was carried out for batteries not subjected to a charge and discharge cycle at a charge cut-off voltage of 4.1V and a discharge cut-off voltage of 3V by flowing a constant electric current equivalent to 0.2C (current value of discharging rating capacity by one-hour rate discharge capacity is set as 1C, and so forth) therethrough at 25˚C. A discharged capacity in a fifth cycle by flowing electric current having a constant value equivalent to 0.2C through batteries was set as the initial capacity. The initial discharge capacities of the batteries produced in this manner were about 20 mAh.

(2) Measurement of room-temperature output power

Batteries subjected to the above-described (1) initial charge and discharge were charged by flowing constant electric current equivalent to 0.2C therethrough in environment of 25˚C for 150 minutes. Thereafter the batteries were discharged for 10 seconds at 0.25C, 0.5C, 1.0C, 2.0C, and 3.0C. Voltages were measured when 10 seconds elapsed. The area of a triangle surround with an electric current-voltage straight line and a lower voltage limit (3V) was set as an output power (W) at room temperature.

(3) Measurement of room-temperature output power

The batteries subjected to the above-described (1) initial charge and discharge were charged by flowing constant electric current equivalent to 0.2C therethrough in environment of 25˚C for 150 minutes. After the batteries were stored in a constant-temperature bath of -30˚C for not less than three hours, the batteries were discharged for two seconds at 0.25C, 0.50C, 0.75C, 1.00C, 1.25C, 1.50C, 1.75C, and 2.00C. Voltages were measured when two seconds elapsed. The area of a triangle surround with an electric current-voltage straight line and a lower voltage limit (3V) was set as an output power (W) at low temperatures.

Table 10

| | Positive electrode side | Negative electrode side | ΔRa | ΔRy | ΔRz | Room-temperature output | Low-temperature output |
|---|---|---|---|---|---|---|---|
| | | | μm | μm | μm | W | W |
| Example5-1 | Separator2 | Separator1 | 0.17 | 1.9 | 3.1 | 1.457 | 0.076 |
| Example5-2 | Separator3 | Separator1 | 0.41 | 11.2 | 7.3 | 1.525 | 0.077 |
| Example5-3 | Separator1 | Separator2 | -0.17 | -1.9 | -3.1 | 1.432 | 0.074 |
| Example5-4 | Separator 1 | Separator3 | -0.41 | -11.2 | -7.3 | 1.522 | 0.074 |

(1) Cycle test

In a cycle test A, a charge and discharge cycle of charging the batteries subjected to the above-described (1) initial charge and discharge up to the upper charge limit of 4.1V by carrying out a 2C constant electric current method and thereafter discharging the batteries up to the charge cut-off voltage of 3V by flowing the constant electric current of 2C therethrough was set as one cycle. This cycle was repeated 500 times. The cycle test was conducted at 60˚C. After the cycle test finished, charge and discharge similar to the above-described (1) initial charge and discharge was carried out. The ratio of the final discharge capacity obtained at that time to the initial capacity was set as the cycle maintenance rate (%) which is shown in table 11.

In a cycle test B, a charge and discharge cycle of charging the batteries subjected to the initial charge and discharge by using the positive electrode and the negative electrode used in the example 4-1 up to the upper charge limit of 4.2V by carrying out the 0.5C constant electric current and constant voltage method and thereafter discharging the battery up to the charge cut-off voltage of 3V by flowing the constant electric current of 0.5C therethrough was set as one cycle. This cycle was repeated 1000 times. The cycle test was conducted at 25˚C. After the cycle test finished, charge and discharge similar to the above-described (1) initial charge and discharge was performed. The ratio of the final discharge capacity obtained at that time to the initial capacity was set as the cycle maintenance rate (%) which is shown in table 11.

Table 11

|  | Cycle test A | Cycle test B |
|---|---|---|
|  | Maintenance rate/% | Maintenance rate/% |
| Example5-1 | 84 | 81 |
| Example5-2 | 82 | 81 |
| Example5-3 | 83 | 80 |
| Example5-4 | 81 | 78 |

As apparent from table 10 and 11, the non-aqueous lithium secondary batteries of the examples 5-1 through 5-4 constructed in the range specified in the present invention are excellent in the properties such as the output power at room temperature, the output power at low temperature, the cycle maintenance rate, and the like.

As shown in table 10, the room-temperature output power (1.457W) of the non-aqueous lithium secondary battery of the example 5-1 is higher than that (1.432W) of the non-aqueous lithium secondary battery of the example 5-3 by about 1.7%. In addition, the low-temperature output power (0.076W) of the non-aqueous lithium secondary battery of the example 5-1 is higher than that (0.074W) of the non-aqueous lithium secondary battery of the example 5-3 by about 2.7%. The results indicate that by making the arithmetic average roughness Ra, the maximum height Ry, and the 10-point average roughness Rz at the negative side of the separator larger than those at the positive side thereof, it is possible to obtain the non-aqueous lithium secondary battery excellent in its room-temperature output power and low-temperature output power. The room-temperature output power and low-temperature output power of the non-aqueous lithium secondary battery of the example 5-2 are higher than those of the non-aqueous lithium secondary battery of the example 5-4. Thus the same thing can be said.

The room-temperature output power (1.525W) of the non-aqueous lithium secondary battery of the example 5-2 is higher than that (1.457W) of the non-aqueous lithium secondary battery of the example 5-1 by about 4.7%. The results indicate that by making the values of the differences ΔRa, ΔRy, and ΔRz larger, it is possible to obtain the secondary battery excellent in its output power property.

In the cycle tests A and B, the cycle maintenance rate of the non-aqueous lithium secondary battery of the example 5-1 is higher than that of the non-aqueous lithium secondary battery of the example 5-3. The cycle maintenance rate of the non-aqueous lithium secondary battery of the example 5-2 is higher than that of the non-aqueous lithium secondary battery of the example 5-4. The results indicate that by making the arithmetic average roughness Ra, the maximum height Ry, and the 10-point average roughness Rz at the negative side of the separator larger than those at the positive side thereof, it is possible to obtain the non-aqueous lithium secondary battery excellent in its cycle maintenance rate.

INDUSTRIAL APPLICABILITY

Because the separator of the present invention for the battery is excellent in its properties such as the cycle property, the high temperature storage property, the room-temperature output power, and the low-temperature output power, the separator can be used for the non-aqueous lithium secondary battery.

EXPLANATION OF REFERENCE SYMBOLS AND NUMERALS

31: aluminum plate
32: separator for battery
33: clip
34: longitudinal direction of separator for battery
35: width direction of separator for battery

**Claims**

1. A separator for a battery comprising a porous layer containing a polypropylene resin as a main component thereof, wherein an arithmetic average roughness Ra of at least one surface is set to not less than 0.3μm.

2. A separator for a battery according to claim 1, wherein the mean peak spacing (Sm) of a roughness of at least one surface is set to not less than 1.3$\mu$m.

3. A separator for a battery according to claim 1 or 2, wherein a 10-point average roughness Rz of a roughness degree of at least one surface is set to not less than 5$\mu$m.

4. A separator for a battery according to any one of claims 1 through 3, wherein a ratio of an arithmetic average roughness Rap of at least one surface in a longitudinal direction thereof to an arithmetic average roughness Ra$_v$ of said one surface in a width direction thereof is set to 0.80 to 1.20.

5. A separator for a battery according to any one of claims 1 through 4, wherein any one of said arithmetic average roughness Ra, maximum height Ry of a roughness, and 10-point average roughness Rz of said one surface is different from said arithmetic average roughness Ra, maximum height Ry of a roughness, and 10-point average roughness Rz of other surface.

6. A separator for a battery according to any one of claims 1 through 5, wherein a porous layer of said surface having said arithmetic average roughness Ra of not less than 0.3pm has a thickness of 5 to 50pm and a puncture strength of 1.5N.

7. A separator for a battery according to any one of claims 1 through 6, wherein a porous layer of said surface having said arithmetic average roughness Ra of not less than 0.3pm has a Gurley value of 10 to 1000 seconds/100ml and a bubble point pore diameter dBP of 0.001 to 0.1$\mu$m.

8. A separator for a battery according to any one of claims 1 through 6, wherein a porous layer of said surface having said arithmetic average roughness Ra of not less than 0.3pm is a layer containing a polypropylene resin as a main component thereof.

9. A separator for a battery according to any one of claims 1 through 8, having $\beta$ activity.

10. A separator for a battery according to any one of claims 1 through 9, being biaxially stretched.

11. A separator for a battery according to any one of claims 1 through 10, comprising a laminate composed of a porous layer containing a polypropylene resin as a main component thereof and a laminate composed of a porous layer containing a high-density polyethylene resin as a main component thereof or
comprising a single layer composed of a porous layer containing a polypropylene resin as a main component thereof and a filler added to said polypropylene resin.

12. A non-aqueous lithium secondary battery using a separator for a battery according to any one of claims 1 through 11, comprising a negative electrode and a positive electrode, opposed thereto via said separator for said battery, both of which are capable of storing and discharging lithium; and a non-aqueous electrolyte containing a non-aqueous solvent and a lithium salt.

13. A non-aqueous lithium secondary battery according to claim 12, wherein a surface of said separator opposed to a negative electrode side and a surface thereof opposed to a positive electrode side are different from each other in any one of said arithmetic average roughness Ra, maximum height Ry, and 10-point average roughness Rz of said separator for said battery.

Fig. 1A

Fig. 1B

| INTERNATIONAL SEARCH REPORT | International application No. |
|---|---|
| | PCT/JP2009/071447 |

A. CLASSIFICATION OF SUBJECT MATTER
*H01M2/16*(2006.01)i, *H01M10/052*(2010.01)i, *H01M10/0566*(2010.01)i, *H01M10/058*(2010.01)i

According to International Patent Classification (IPC) or to both national classification and IPC

B. FIELDS SEARCHED

Minimum documentation searched (classification system followed by classification symbols)
H01M2/16, H01M10/052, H01M10/0566, H01M10/058

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2009-238752 A  (Samsung SDI Co., Ltd.), 15 October 2009 (15.10.2009), claims; paragraphs [0054] to [0063]; examples & US 2009/0246614 A     & EP 2105981 A1 & CN 101546822 A | 1,3,5,8, 11-13 |
| X | JP 9-245762 A  (Nitto Denko Corp.), 19 September 1997 (19.09.1997), | 1,4,5,8, 11-13 |
| Y | claims; paragraphs [0013] to [0018]; examples | 6,7,9,10 |
| A | (Family: none) | 2,3 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 February, 2010 (08.02.10) | 16 February, 2010 (16.02.10) |

| Name and mailing address of the ISA/ Japanese Patent Office | Authorized officer |
|---|---|
| Facsimile No. | Telephone No. |

Form PCT/ISA/210 (second sheet) (April 2007)

**EP 2 381 510 A1**

**INTERNATIONAL SEARCH REPORT**

| International application No. |
|---|
| PCT/JP2009/071447 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 96/27633 A1 (Asahi Chemical Industry Co., Ltd.), 12 September 1996 (12.09.1996), claims; table 1 & JP 3525390 B & US 6127438 A & EP 814117 A1 & DE 69626194 D & DE 69626194 T & AU 4844596 A & CA 2213858 A & KR 10-0269676 B | 6-13 |
| Y | JP 9-219184 A (Nitto Denko Corp.), 19 August 1997 (19.08.1997), claims; paragraphs [0031], [0041] to [0042]; examples; tables 1 to 2 & US 5824430 A & EP 794583 A1 & DE 69702873 D & DE 69702873 T | 6-13 |
| Y | JP 9-213295 A (Nitto Denko Corp.), 15 August 1997 (15.08.1997), claims; paragraphs [0025] to [0026], [0035] to [0042] (Family: none) | 6-13 |
| Y | JP 11-195409 A (Ube Industries, Ltd.), 21 July 1999 (21.07.1999), claims; table 1 & GB 2335106 A & GB 9904541 A0 | 6-13 |
| Y | JP 11-268118 A (Mitsui Chemicals, Inc.), 05 October 1999 (05.10.1999), claims; paragraphs [0046] to [0047], [0058]; table 3 (Family: none) | 6-13 |
| Y | WO 2002/066233 A1 (New Japan Chemical Co., Ltd.), 29 August 2002 (29.08.2002), claims; abstract & JP 2008-111134 A & JP 4102894 B & US 2007/0269719 A1 & US 7235203 B2 & EP 1369221 A1 & CA 2438243 A & BR 207452 A & CN 1525907 A & CN 1820931 A & TW 270561 B & AT 448072 T | 9-13 |
| Y | JP 2000-30683 A (Celgard L.L.C.), 28 January 2000 (28.01.2000), claims; paragraph [0002] & US 2001/0038942 A1 & EP 967671 A2 & TW 447161 B & CA 2273127 A & KR 10-2000-0006475 A & CA 2273127 A1 | 9-13 |

Form PCT/ISA/210 (continuation of second sheet) (April 2007)

44

EP 2 381 510 A1

INTERNATIONAL SEARCH REPORT

International application No.

PCT/JP2009/071447

C (Continuation). DOCUMENTS CONSIDERED TO BE RELEVANT

| Category* | Citation of document, with indication, where appropriate, of the relevant passages | Relevant to claim No. |
|---|---|---|
| Y | JP 63-199742 A (Toray Industries, Inc.),<br>18 August 1988 (18.08.1988),<br>page 1; examples<br>(Family: none) | 9-13 |
| A | JP 2006-278143 A (Sanyo Electric Co., Ltd.),<br>12 October 2006 (12.10.2006),<br>claim 1<br>(Family: none) | 2 |
| A | JP 2005-171230 A (Toray Industries, Inc.),<br>30 June 2005 (30.06.2005),<br>claims; comparative example 4<br>(Family: none) | 9 |
| A | JP 11-60792 A (Mitsubishi Chemical Corp.),<br>05 March 1999 (05.03.1999),<br>claims; examples<br>(Family: none) | 11 |

Form PCT/ISA/210 (continuation of second sheet) (April 2007)

45

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11060791 A
- JP 4049416 B
- US 4049416 A
- WO 3739481 A
- JP 2003306585 A
- JP 6289566 A
- JP 9194650 A

**Non-patent literature cited in the description**

- *Macromol. Chem.,* 1986, vol. 187, 643-652
- *Prog. Polym. Sci.,* 1991, vol. 16, 361-404
- *Macromol. Symp.,* 1995, vol. 89, 499-511
- *Macromol. Chem.,* 1964, vol. 75, 134